(19) **Europäisches Patentamt**
**European Patent Office**
**Office européen des brevets**

(11) **EP 4 150 983 B1**

(12) **EUROPEAN PATENT SPECIFICATION**

(45) Date of publication and mention
of the grant of the patent:
**19.03.2025 Bulletin 2025/12**

(21) Application number: **21713261.2**

(22) Date of filing: **25.02.2021**

(51) International Patent Classification (IPC):
**H04W 64/00** (2009.01)   **G01S 1/04** (2006.01)
**G01S 5/02** (2010.01)   **G01S 5/10** (2006.01)

(52) Cooperative Patent Classification (CPC):
**G01S 5/0236; G01S 1/0428; H04W 64/006;**
G01S 5/02; G01S 5/10; G01S 2205/008

(86) International application number:
**PCT/US2021/019652**

(87) International publication number:
**WO 2021/230945 (18.11.2021 Gazette 2021/46)**

(54) **METHODS AND APPARATUS FOR PER-METHOD POSITIONING ASSISTANCE PRIORITIZATION**

VERFAHREN UND GERÄTE ZUR PRIORISIERUNG DER POSITIONIERUNGSHILFE NACH VERFAHREN

PROCÉDÉS ET APPAREIL POUR UNE HIÉRARCHISATION D'AIDE AU POSITIONNEMENT PAR UN PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.05.2020   US 202063024433 P**
**24.02.2021   US 202117184393**

(43) Date of publication of application:
**22.03.2023 Bulletin 2023/12**

(73) Proprietor: **Qualcomm Incorporated**
**San Diego, CA 92121-1714 (US)**

(72) Inventors:
• **MANOLAKOS, Alexandros**
**San Diego, CA 92121-1714 (US)**

• **FISCHER, Sven**
**San Diego, CA 92121-1714 (US)**
• **OPSHAUG, Guttorm Ringstad**
**San Diego, CA 92121-1714 (US)**
• **MIRBAGHERI, Arash**
**San Diego, CA 92121-1714 (US)**
• **GAAL, Peter**
**San Diego, CA 92121-1714 (US)**

(74) Representative: **Reddie & Grose LLP**
**The White Chapel Building**
**10 Whitechapel High Street**
**London E1 8QS (GB)**

(56) References cited:
**US-A1- 2017 102 447   US-A1- 2017 201 960**
**US-A1- 2017 280 280   US-A1- 2020 021 946**

**Description**

**BACKGROUND OF THE DISCLOSURE**

*1. Field of the Disclosure*

Aspects of the disclosure relate generally to positioning for user equipment (UE), and in particular for positioning assistance data used for positioning for a UE.

*2. Description of the Related Art*

Wireless communication systems have developed through various generations, including a first-generation analog wireless phone service (1G), a second-generation (2G) digital wireless phone service (including interim 2.5G networks), a third-generation (3G) high speed data, Internet-capable wireless service, and a fourth-generation (4G) service (e.g., Long-Term Evolution (LTE), WiMax). There are presently many different types of wireless communication systems in use, including cellular and personal communications service (PCS) systems. Examples of known cellular systems include the cellular Analog Advanced Mobile Phone System (AMPS), and digital cellular systems based on code division multiple access (CDMA), frequency division multiple access (FDMA), time division multiple access (TDMA), the Global System for Mobile access (GSM) variation of TDMA, etc.

A fifth generation (5G) mobile standard calls for higher data transfer speeds, greater numbers of connections, and better coverage, among other improvements. The 5G standard (also referred to as "New Radio" or "NR"), according to the Next Generation Mobile Networks Alliance, is designed to provide data rates of several tens of megabits per second to each of tens of thousands of users.

A UE may determine a location estimate or assist in determining a location estimate using signals it receives from base stations. To assist a UE in determining which signals to seek for positioning, a network may provide the UE with positioning assistance data containing information that will aid in detecting and measuring positioning reference signals from one or more base stations.

US 2017/280280 provides example methods, apparatuses, and/or articles of manufacture that may be utilized, in whole or in part, to facilitate and/or support one or more operations and/or techniques for enhancing searches for positioning reference signals (PRS) via one or more runtime conditions, such as for use in or with mobile communication devices, for example.

US 2017/102447 provides methods and apparatuses for controlling a communication device. A first subframe is received from a serving cell and a plurality of subframes is received from a plurality of neighbor cells. A respective time difference of arrival (TDOA) is measured for each of the plurality of subframes based on a time of arrival (TOA) of the first subframe. At least one of the measured TDOAs is transmitted to a location server. The respective TDOAs are measured based on at least one of a cell-specific reference signal (CRS) and a synchronization signal in the plurality of subframes.

US 2020/021946 describes methods and techniques for supporting location services for a user equipment (UE) in a Fifth Generation wireless network in which a base station, such as a gNB or ng-eNB, broadcasts a Positioning Reference Signal (PRS) in a plurality of different directions and at a plurality of different times. A PRS muting configuration is used in which PRS is muted using a time based and angle based pattern to prevent interference between beams transmitted by other base stations and/or to prevent interference between beams transmitted simultaneously by a single base station. The time based and angle based muting pattern, for example, may provide an indication for each direction in the plurality of different directions and for each time in the plurality of different times and as to whether the PRS is transmitted or muted by the base station.

US 2017/201960 describes a method by which a terminal receives a reference signal for determining a position in a wireless communication system comprises the steps of: receiving information, which relates to a neighboring cell, including information relating to a plurality of cells to which an aggregation positioning reference signal (PRS) is transmitted; receiving the aggregation PRS by using the information relating to a plurality of cells; and measuring a reference signal time difference (RSTD) for the plurality of cells by using the received aggregation PRS, wherein a sequence of the aggregation PRS can be initialized by unique identifiers allocated to the plurality of cells.

**SUMMARY**

The invention is defined in the independent claims to which reference should be made. Preferable features are set out in the dependent claims.

## =BRIEF DESCRIPTION OF THE DRAWINGS

The accompanying drawings are presented to aid in the description of various aspects of the disclosure and are provided solely for illustration of the aspects and not limitation thereof.

FIG. 1 illustrates an exemplary wireless communications system, according to various aspects of the disclosure.

FIGS. 2A and 2B illustrate example wireless network structures, according to various aspects of the disclosure.

FIG. 3 illustrates a block diagram of a design of base station and user equipment (UE), which may be one of the base stations and one of the UEs in Fig. 1.

FIG. 4 is a diagram of a structure of an exemplary subframe sequence with positioning reference signal (PRS) positioning occasions.

FIGs. 5A, 5B, 5C, and 5D illustrate a hierarchy of frequency layer, TRPs, PRS resource sets and PRS resources and examples of prioritizations thereof.

FIG. 6 is a signaling flow that illustrates various messages that may be sent between components of a wireless network during a positioning session that includes positioning assistance data prioritization per positioning method.

FIG. 7 shows a flowchart for an exemplary method for position determination of a UE performed by the UE in a wireless network wireless.

FIG. 8 shows a flowchart for an exemplary method for position determination of a UE performed by the location server in a wireless network wireless.

FIG. 9 is a schematic block diagram illustrating certain exemplary features of a UE enabled to support positioning using prioritized positioning assistance data per positioning method.

FIG. 10 is a schematic block diagram illustrating certain exemplary features of a location server enabled to support positioning of a UE using prioritized positioning assistance data per positioning method.

## DETAILED DESCRIPTION

Aspects of the disclosure are provided in the following description and related drawings directed to various examples provided for illustration purposes. Alternate aspects may be devised without departing from the scope of the disclosure. Additionally, well-known elements of the disclosure will not be described in detail or will be omitted so as not to obscure the relevant details of the disclosure.

The words "exemplary" and/or "example" are used herein to mean "serving as an example, instance, or illustration." Any aspect described herein as "exemplary" and/or "example" is not necessarily to be construed as preferred or advantageous over other aspects. Likewise, the term "aspects of the disclosure" does not require that all aspects of the disclosure include the discussed feature, advantage, or mode of operation.

Those of skill in the art will appreciate that the information and signals described below may be represented using any of a variety of different technologies and techniques. For example, data, instructions, commands, information, signals, bits, symbols, and chips that may be referenced throughout the description below may be represented by voltages, currents, electromagnetic waves, magnetic fields or particles, optical fields or particles, or any combination thereof, depending in part on the particular application, in part on the desired design, in part on the corresponding technology, etc.

Further, many aspects are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, the sequence(s) of actions described herein can be considered to be embodied entirely within any form of non-transitory computer-readable storage medium having stored therein a corresponding set of computer instructions that, upon execution, would cause or instruct an associated processor of a device to perform the functionality described herein. Thus, the various aspects of the disclosure may be embodied in a number of different forms, all of which have been contemplated to be within the scope of the claimed subject matter. In addition, for each of the aspects described herein, the corresponding form of any such aspects may be described herein as, for example, "logic configured to" perform the described action.

As used herein, the terms "user equipment" (UE), "base station", and "transmission point (TRP)" are not intended to be specific or otherwise limited to any particular Radio Access Technology (RAT), unless otherwise noted. In general, a UE may be any wireless communication device (e.g., a mobile phone, router, tablet computer, laptop computer, tracking device, wearable (e.g., smartwatch, glasses, augmented reality (AR) / virtual reality (VR) headset, etc.), vehicle (e.g., automobile, motorcycle, bicycle, etc.), Internet of Things (IoT) device, etc.) used by a user to communicate over a wireless communications network. A UE may be mobile or may (e.g., at certain times) be stationary, and may communicate with a Radio Access Network (RAN). As used herein, the term "UE" may be referred to interchangeably as an "access terminal" or "AT," a "client device," a "wireless device," a "subscriber device," a "subscriber terminal," a "subscriber station," a "user terminal" or UT, a "mobile terminal," a "mobile station," or variations thereof. Generally, UEs can communicate with a core network via a RAN, and through the core network the UEs can be connected with external networks such as the Internet and with other UEs. Of course, other mechanisms of connecting to the core network and/or the Internet are also possible for the UEs, such as over wired access networks, wireless local area network (WLAN) networks (e.g., based on IEEE 802.11, etc.) and so on.

A base station or transmission point (TRP) may operate according to one of several RATs in communication with UEs depending on the network in which it is deployed, and may be alternatively referred to as an access point (AP), a network node, a NodeB, an evolved NodeB (eNB), a New Radio (NR) Node B (also referred to as a gNB or gNodeB), etc. In addition, in some systems a base station may provide purely edge node signaling functions while in other systems it may provide additional control and/or network management functions. A communication link through which UEs can send signals to a base station is called an uplink (UL) channel (e.g., a reverse traffic channel, a reverse control channel, an access channel, etc.). A communication link through which the base station can send signals to UEs is called a downlink (DL) or forward link channel (e.g., a paging channel, a control channel, a broadcast channel, a forward traffic channel, etc.). As used herein the term traffic channel (TCH) can refer to either an UL / reverse or DL / forward traffic channel.

The term "base station" may refer to a single physical transmission point or to multiple physical transmission points that may or may not be co-located. For example, where the term "base station" refers to a single physical transmission point, the physical transmission point may be an antenna of the base station corresponding to a cell of the base station. Where the term "base station" refers to multiple co-located physical transmission points, the physical transmission points may be an array of antennas (e.g., as in a multiple-input multiple-output (MIMO) system or where the base station employs beamforming) of the base station. Where the term "base station" refers to multiple non-co-located physical transmission points, the physical transmission points may be a distributed antenna system (DAS) (a network of spatially separated antennas connected to a common source via a transport medium) or a remote radio head (RRH) (a remote base station connected to a serving base station). Alternatively, the non-co-located physical transmission points may be the serving base station receiving the measurement report from the UE and a neighbor base station whose reference RF signals the UE is measuring.

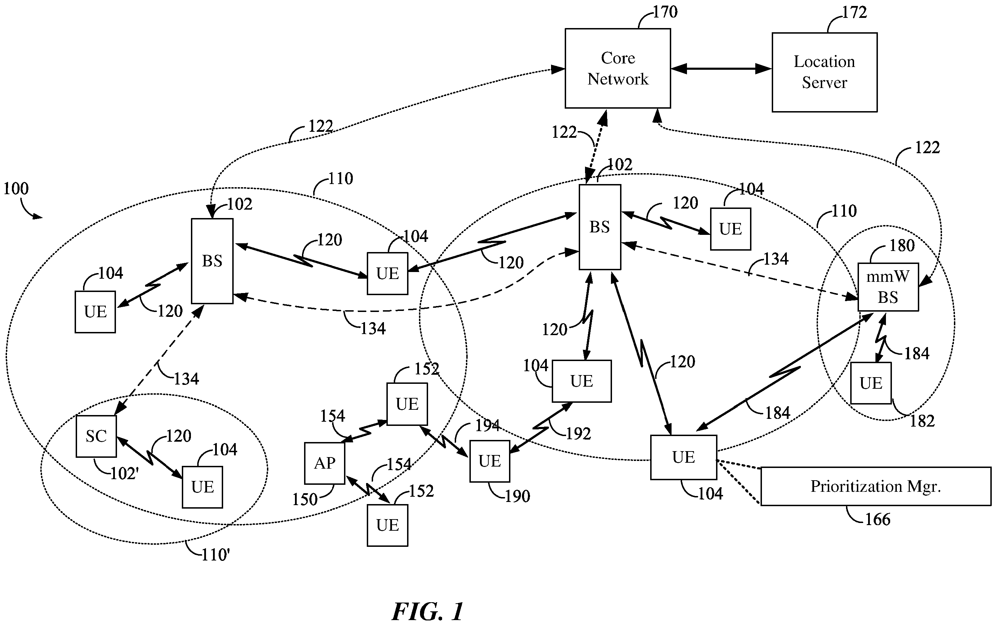

**FIG. 1** illustrates an exemplary wireless communications system 100. The wireless communications system 100 (which may also be referred to as a wireless wide area network (WWAN)) may include various base stations 102 and various UEs 104. The base stations 102 may include macro cell base stations (high power cellular base stations) and/or small cell base stations (low power cellular base stations). In an aspect, the macro cell base station may include eNBs where the wireless communications system 100 corresponds to an LTE network, or gNBs where the wireless communications system 100 corresponds to a 5G network, or a combination of both, and the small cell base stations may include femtocells, picocells, microcells, etc.

The base stations 102 or TRPs may collectively form a RAN and interface with a core network 170 (e.g., an evolved packet core (EPC) or next generation core (NGC)) through backhaul links 122, and through the core network 170 to one or more location servers 172. In addition to other functions, the base stations 102 may perform functions that relate to one or more of transferring user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, RAN sharing, multimedia broadcast multicast service (MBMS), subscriber and equipment trace, RAN information management (RIM), paging, positioning, and delivery of warning messages. The base stations 102 may communicate with each other directly or indirectly (e.g., through the EPC / NGC) over backhaul links 134, which may be wired or wireless.

The base stations 102 may wirelessly communicate with the UEs 104. Each of the base stations 102 may provide communication coverage for a respective geographic coverage area 110. In an aspect, one or more cells may be supported by a base station 102 in each coverage area 110. A "cell" is a logical communication entity used for communication with a base station (e.g., over some frequency resource, referred to as a carrier frequency, component carrier, carrier, band, or the like), and may be associated with an identifier (e.g., a physical cell identifier (PCID), a virtual cell identifier (VCID)) for distinguishing cells operating via the same or a different carrier frequency. In some cases, different cells may be configured according to different protocol types (e.g., machine-type communication (MTC), narrowband IoT (NB-IoT), enhanced mobile broadband (eMBB), or others) that may provide access for different types of UEs. In some cases, the term "cell" may also refer to a geographic coverage area of a base station (e.g., a sector), insofar as a carrier frequency can be detected and used for communication within some portion of geographic coverage areas 110.

While neighboring macro cell base station 102 geographic coverage areas 110 may partially overlap (e.g., in a handover region), some of the geographic coverage areas 110 may be substantially overlapped by a larger geographic coverage area 110. For example, a small cell base station 102' may have a coverage area 110' that substantially overlaps with the coverage area 110 of one or more macro cell base stations 102. A network that includes both small cell and macro cell base stations may be known as a heterogeneous network. A heterogeneous network may also include home eNBs (HeNBs), which may provide service to a restricted group known as a closed subscriber group (CSG).

The communication links 120 between the base stations 102 and the UEs 104 may include UL (also referred to as reverse link) transmissions from a UE 104 to a base station 102 and/or downlink (DL) (also referred to as forward link) transmissions from a base station 102 to a UE 104. The communication links 120 may use MIMO antenna technology, including spatial multiplexing, beamforming, and/or transmit diversity. The communication links 120 may be through one or more carrier frequencies. Allocation of carriers may be asymmetric with respect to DL and UL (e.g., more or less carriers may be allocated for DL than for UL).

The wireless communications system 100 may further include a wireless local area network (WLAN) access point (AP) 150 in communication with WLAN stations (STAs) 152 via communication links 154 in an unlicensed frequency spectrum (e.g., 5 GHz). When communicating in an unlicensed frequency spectrum, the WLAN STAs 152 and/or the WLAN AP 150 may perform a clear channel assessment (CCA) prior to communicating in order to determine whether the channel is available.

The small cell base station 102' may operate in a licensed and/or an unlicensed frequency spectrum. When operating in an unlicensed frequency spectrum, the small cell base station 102' may employ LTE or 5G technology and use the same 5 GHz unlicensed frequency spectrum as used by the WLAN AP 150. The small cell base station 102', employing LTE / 5G in an unlicensed frequency spectrum, may boost coverage to and/or increase capacity of the access network. LTE in an unlicensed spectrum may be referred to as LTE-unlicensed (LTE-U), licensed assisted access (LAA), or MulteFire.

The wireless communications system 100 may further include a millimeter wave (mmW) base station 180 that may operate in mmW frequencies and/or near mmW frequencies in communication with a UE 182. Extremely high frequency (EHF) is part of the RF in the electromagnetic spectrum. EHF has a range of 30 GHz to 300 GHz and a wavelength between 1 millimeter and 10 millimeters. Radio waves in this band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW/near mmW radio frequency band have high path loss and a relatively short range. The mmW base station 180 and the UE 182 may utilize beamforming (transmit and/or receive) over a mmW communication link 184 to compensate for the extremely high path loss and short range. Further, it will be appreciated that in alternative configurations, one or more base stations 102 may also transmit using mmW or near mmW and beamforming. Accordingly, it will be appreciated that the foregoing illustrations are merely examples and should not be construed to limit the various aspects disclosed herein.

Transmit beamforming is a technique for focusing an RF signal in a specific direction. Traditionally, when a network node (e.g., a base station) broadcasts an RF signal, it broadcasts the signal in all directions (omni-directionally). With transmit beamforming, the network node determines where a given target device (e.g., a UE) is located (relative to the transmitting network node) and projects a stronger downlink RF signal in that specific direction, thereby providing a faster (in terms of data rate) and stronger RF signal for the receiving device(s). To change the directionality of the RF signal when transmitting, a network node can control the phase and relative amplitude of the RF signal at each of the one or more transmitters that are broadcasting the RF signal. For example, a network node may use an array of antennas (referred to as a "phased array" or an "antenna array") that creates a beam of RF waves that can be "steered" to point in different directions, without actually moving the antennas. Specifically, the RF current from the transmitter is fed to the individual antennas with the correct phase relationship so that the radio waves from the separate antennas add together to increase the radiation in a desired direction, while cancelling to suppress radiation in undesired directions.

In receive beamforming, the receiver uses a receive beam to amplify RF signals detected on a given channel. For example, the receiver can increase the gain setting and/or adjust the phase setting of an array of antennas in a particular direction to amplify (e.g., to increase the gain level of) the RF signals received from that direction. Thus, when a receiver is said to beamform in a certain direction, it means the beam gain in that direction is high relative to the beam gain along other directions, or the beam gain in that direction is the highest compared to the beam gain in that direction of all other receive beams available to the receiver. This results in a stronger received signal strength (e.g., reference signal received power (RSRP), reference signal received quality (RSRQ), signal-to-interference-plus-noise ratio (SINR), etc.) of the RF signals received from that direction.

In 5G, the frequency spectrum in which wireless nodes (e.g., base stations 102/180, UEs 104/182) operate is divided into multiple frequency ranges, FR1 (from 450 to 6000 MHz), FR2 (from 24250 to 52600 MHz), FR3 (above 52600 MHz), and FR4 (between FR1 and FR2). In a multi-carrier system, such as 5G, one of the carrier frequencies is referred to as the "primary carrier" or "anchor carrier" or "primary serving cell" or "PCell," and the remaining carrier frequencies are referred to as "secondary carriers" or "secondary serving cells" or "SCells." In carrier aggregation, the anchor carrier is the carrier operating on the primary frequency (e.g., FR1) utilized by a UE 104/182 and the cell in which the UE 104/182 either performs the initial radio resource control (RRC) connection establishment procedure or initiates the RRC connection re-establishment procedure. The primary carrier carries all common and UE-specific control channels. A secondary carrier is a carrier operating on a second frequency (e.g., FR2) that may be configured once the RRC connection is established between the UE 104 and the anchor carrier and that may be used to provide additional radio resources. The secondary carrier may contain only necessary signaling information and signals, for example, those that are UE-specific may not be present in the secondary carrier, since both primary uplink and downlink carriers are typically UE-specific. This means that different UEs 104/182 in a cell may have different downlink primary carriers. The same is true for the uplink primary carriers. The network is able to change the primary carrier of any UE 104/182 at any time. This is done, for example, to balance the load on different carriers. Because a "serving cell" (whether a PCell or an SCell) corresponds to a carrier frequency / component carrier over which some base station is communicating, the term "cell," "serving cell," "component carrier," "carrier frequency," and the like can be used interchangeably.

For example, still referring to FIG. 1, one of the frequencies utilized by the macro cell base stations 102 may be an anchor carrier (or "PCell") and other frequencies utilized by the macro cell base stations 102 and/or the mmW base station 180 may be secondary carriers ("SCells"). The simultaneous transmission and/or reception of multiple carriers enables the UE 104/182 to significantly increase its data transmission and/or reception rates. For example, two 20 MHz aggregated carriers in a multi-carrier system would theoretically lead to a two-fold increase in data rate (i.e., 40 MHz), compared to that attained by a single 20 MHz carrier.

The wireless communications system 100 may further include one or more UEs, such as UE 190, that connects indirectly to one or more communication networks via one or more device-to-device (D2D) peer-to-peer (P2P) links. In the example of FIG. 1, UE 190 has a D2D P2P link 192 with one of the UEs 104 connected to one of the base stations 102 (e.g., through which UE 190 may indirectly obtain cellular connectivity) and a D2D P2P link 194 with WLAN STA 152 connected to the WLAN AP 150 (through which UE 190 may indirectly obtain WLAN-based Internet connectivity). In an example, the D2D P2P links 192 and 194 may be supported with any well-known D2D RAT, such as LTE Direct (LTE-D), WiFi Direct (WiFi-D), Bluetooth®, and so on.

The wireless communications system 100 may further include a UE 104 that may communicate with a macro cell base station 102 over a communication link 120 and/or the mmW base station 180 over a mmW communication link 184. For example, the macro cell base station 102 may support a PCell and one or more SCells for the UE 104 and the mmW base station 180 may support one or more SCells for the UE 104. In an aspect, the UE 104 may include a prioritization manager 166 that may enable the UE 104 to perform the UE operations described herein. Note that although only one UE in FIG. 1 is illustrated as having a prioritization manager 166, any of the UEs in FIG. 1 may be configured to perform the UE operations described herein.

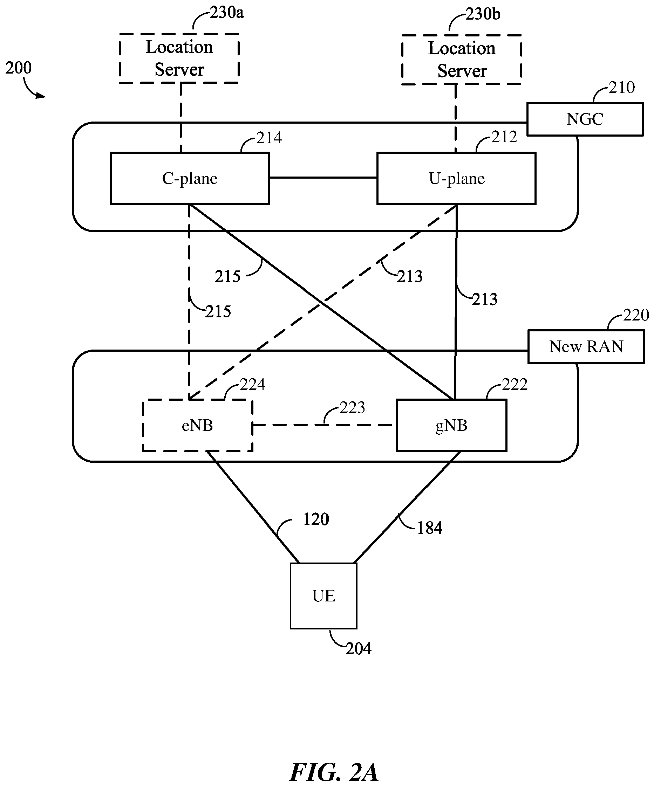

FIG. 2A illustrates an example wireless network structure 200. For example, an NGC 210 (also referred to as a "5GC") can be viewed functionally as control plane functions 214 (e.g., UE registration, authentication, network access, gateway selection, etc.) and user plane functions 212, (e.g., UE gateway function, access to data networks, IP routing, etc.) which operate cooperatively to form the core network. User plane interface (NG-U) 213 and control plane interface (NG-C) 215 connect the gNB 222 to the NGC 210 and specifically to the control plane functions 214 and user plane functions 212. In an additional configuration, an eNB 224 may also be connected to the NGC 210 via NG-C 215 to the control plane functions 214 and NG-U 213 to user plane functions 212. Further, eNB 224 may directly communicate with gNB 222 via a backhaul connection 223. In some configurations, the New RAN 220 may only have one or more gNBs 222, while other configurations include one or more of both eNBs 224 and gNBs 222. Either gNB 222 or eNB 224 may communicate with UEs 204 (e.g., any of the UEs depicted in FIG. 1). Another optional aspect may include one or more location servers 230a, 230b (sometimes collectively referred to as location server 230) (which may correspond to LMF 196), which may be in communication with the control plane functions 214 and user plane functions 212, respectively, in the NGC 210 to provide location assistance for UEs 204. The location server 230 can be implemented as a plurality of separate servers (e.g., physically separate servers, different software modules on a single server, different software modules spread across multiple physical servers, etc.), or alternately may each correspond to a single server. The location server 230 can be configured to support one or more location services for UEs 204 that can connect to the location server 230 via the core network, NGC 210, and/or via the Internet (not illustrated). Further, the location server 230 may be integrated into a component of the core network, or alternatively may be external to the core network, e.g., in the New RAN 220.

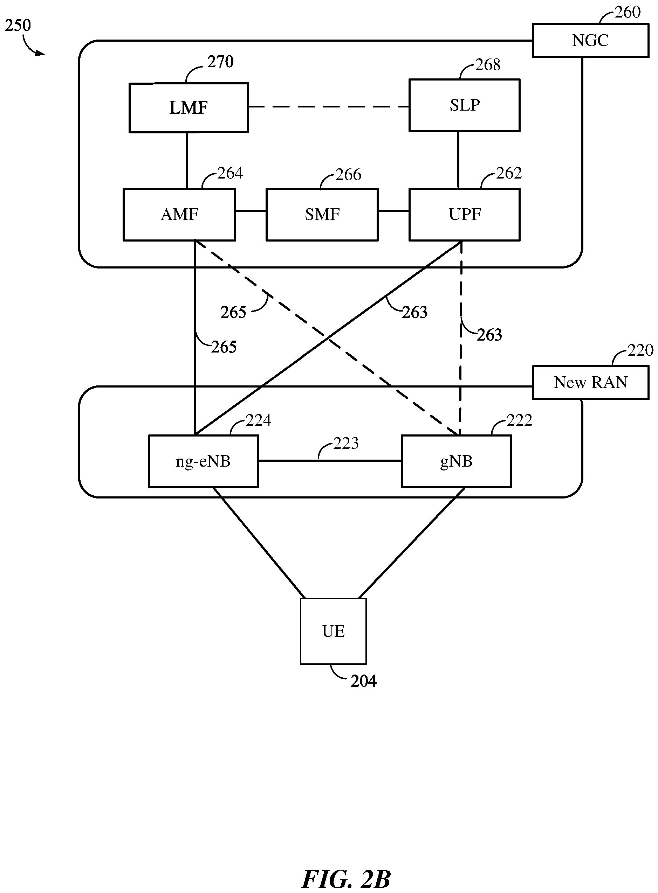

FIG. 2B illustrates another example wireless network structure 250. For example, an NGC 260 (also referred to as a "5GC") can be viewed functionally as control plane functions, provided by an access and mobility management function (AMF) 264, user plane function (UPF) 262, a session management function (SMF) 266, SLP 268, and an LMF 270, which operate cooperatively to form the core network (i.e., NGC 260). User plane interface 263 and control plane interface 265 connect the ng-eNB 224 to the NGC 260 and specifically to UPF 262 and AMF 264, respectively. In an additional configuration, a gNB 222 may also be connected to the NGC 260 via control plane interface 265 to AMF 264 and user plane interface 263 to UPF 262. Further, eNB 224 may directly communicate with gNB 222 via the backhaul connection 223, with or without gNB direct connectivity to the NGC 260. In some configurations, the New RAN 220 may only have one or more gNBs 222, while other configurations include one or more of both ng-eNBs 224 and gNBs 222. Either gNB 222 or ng-eNB 224 may communicate with UEs 204 (e.g., any of the UEs depicted in FIG. 1). The base stations of the New RAN 220 communicate with the AMF 264 264 over the N2 interface and the UPF 262 over the N3 interface.

The functions of the AMF include registration management, connection management, reachability management, mobility management, lawful interception, transport for session management (SM) messages between the UE 204 and the SMF 266, transparent proxy services for routing SM messages, access authentication and access authorization, transport for short message service (SMS) messages between the UE 204 and the short message service function (SMSF) (not shown), and security anchor functionality (SEAF). The AMF also interacts with the authentication server function (AUSF) (not shown) and the UE 204, and receives the intermediate key that was established as a result of the UE 204 authentication process. In the case of authentication based on a UMTS (universal mobile telecommunications system) subscriber identity module (USIM), the AMF retrieves the security material from the AUSF. The functions of the AMF also include security context management (SCM). The SCM receives a key from the SEAF that it uses to derive access-network specific keys. The functionality of the AMF also includes location services management for regulatory services, transport for location services messages between the UE 204 and the location management function (LMF) 270 (which may correspond to LMF 196), as well as between the New RAN 220 and the LMF 270, evolved packet system (EPS) bearer identifier allocation for interworking with the EPS, and UE 204 mobility event notification. In addition, the AMF also supports functionalities for non-Third Generation Partnership Project (3GPP) access networks.

Functions of the UPF include acting as an anchor point for intra-/inter-RAT mobility (when applicable), acting as an external protocol data unit (PDU) session point of interconnect to the data network (not shown), providing packet routing and forwarding, packet inspection, user plane policy rule enforcement (e.g., gating, redirection, traffic steering), lawful interception (user plane collection), traffic usage reporting, quality of service (QoS) handling for the user plane (e.g., UL/DL rate enforcement, reflective QoS marking in the DL), UL traffic verification (service data flow (SDF) to QoS flow mapping), transport level packet marking in the UL and DL, DL packet buffering and DL data notification triggering, and sending and forwarding of one or more "end markers" to the source RAN node.

The functions of the SMF 266 include session management, UE Internet protocol (IP) address allocation and management, selection and control of user plane functions, configuration of traffic steering at the UPF to route traffic to the proper destination, control of part of policy enforcement and QoS, and downlink data notification. The interface over which the SMF 266 communicates with the AMF 264 is referred to as the N11 interface.

Another optional aspect may include an LMF 270, which may be in communication with the NGC 260 to provide location assistance for UEs 204. The LMF 270 can be implemented as a plurality of separate servers (e.g., physically separate servers, different software modules on a single server, different software modules spread across multiple physical servers, etc.), or alternately may each correspond to a single server. The LMF 270 can be configured to support one or more location services for UEs 204 that can connect to the LMF 270 via the core network, NGC 260, and/or via the Internet (not illustrated).

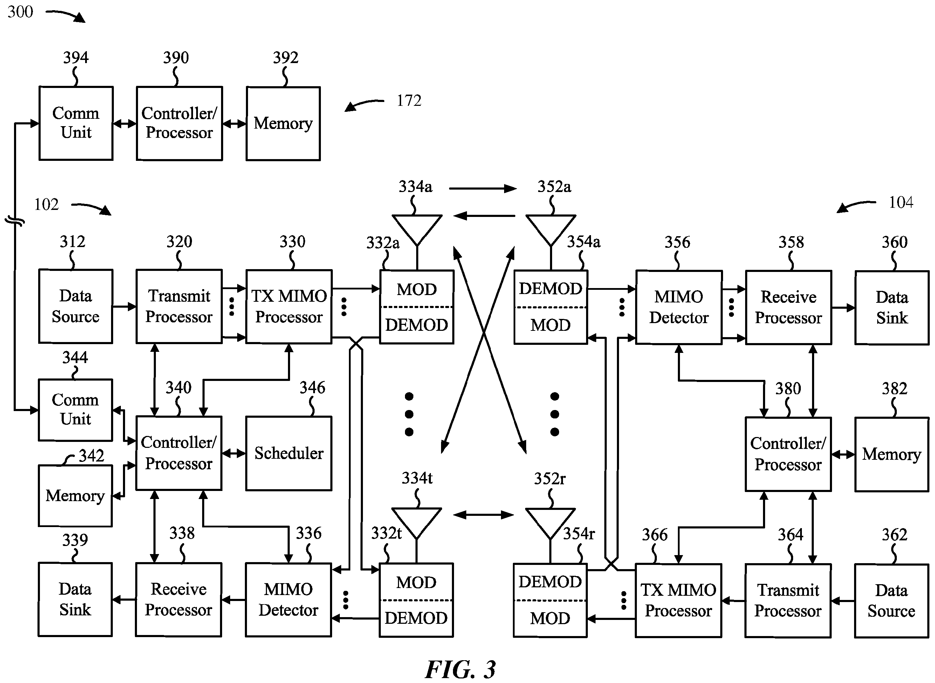

**FIG. 3** shows a block diagram of a design 300 of base station 102 and UE 104, which may be one of the base stations and one of the UEs in FIG. 1. Base station 102 may be equipped with T antennas 334a through 334t, and UE 104 may be equipped with R antennas 352a through 352r, where in general $T \geq 1$ and $R \geq 1$.

At base station 102, a transmit processor 320 may receive data from a data source 312 for one or more UEs, select one or more modulation and coding schemes (MCS) for each UE based at least in part on channel quality indicators (CQIs) received from the UE, process (e.g., encode and modulate) the data for each UE based at least in part on the MCS(s) selected for the UE, and provide data symbols for all UEs. Transmit processor 320 may also process system information (e.g., for semi-static resource partitioning information (SRPI) and/or the like) and control information (e.g., CQI requests, grants, upper layer signaling, and/or the like) and provide overhead symbols and control symbols. Transmit processor 320 may also generate reference symbols for reference signals (e.g., the cell-specific reference signal (CRS)) and synchronization signals (e.g., the primary synchronization signal (PSS) and secondary synchronization signal (SSS)). A transmit (TX) multiple-input multiple-output (MIMO) processor 330 may perform spatial processing (e.g., precoding) on the data symbols, the control symbols, the overhead symbols, and/or the reference symbols, if applicable, and may provide T output symbol streams to T modulators (MODs) 332a through 332t. Each modulator 332 may process a respective output symbol stream (e.g., for OFDM and/or the like) to obtain an output sample stream. Each modulator 332 may further process (e.g., convert to analog, amplify, filter, and upconvert) the output sample stream to obtain a downlink signal. T downlink signals from modulators 332a through 332t may be transmitted via T antennas 334a through 334t, respectively. According to various aspects described in more detail below, the synchronization signals can be generated with location encoding to convey additional information.

At UE 104, antennas 352a through 352r may receive the downlink signals from base station 102 and/or other base stations and may provide received signals to demodulators (DEMODs) 354a through 354r, respectively. Each demodulator 354 may condition (e.g., filter, amplify, down convert, and digitize) a received signal to obtain input samples. Each demodulator 354 may further process the input samples (e.g., for OFDM and/or the like) to obtain received symbols. A MIMO detector 356 may obtain received symbols from all R demodulators 354a through 354r, perform MIMO detection on the received symbols if applicable, and provide detected symbols. A receive processor 358 may process (e.g., demodulate and decode) the detected symbols, provide decoded data for UE 104 to a data sink 360, and provide decoded control information and system information to a controller/processor 380. A channel processor may determine reference signal received power (RSRP), received signal strength indicator (RSSI), reference signal received quality (RSRQ), channel quality indicator (CQI), and/or the like. In some aspects, one or more components of UE 104 may be included in a housing.

On the uplink, at UE 104, a transmit processor 364 may receive and process data from a data source 362 and control information (e.g., for reports comprising RSRP, RSSI, RSRQ, CQI, and/or the like) from controller/processor 380. Transmit processor 364 may also generate reference symbols for one or more reference signals. The symbols from transmit processor 364 may be precoded by a TX MIMO processor 366 if applicable, further processed by modulators 354a through 354r (e.g., for DFT-s-OFDM, CP-OFDM, and/or the like), and transmitted to base station 102. At base station 102, the uplink signals from UE 104 and other UEs may be received by antennas 334, processed by demodulators 332, detected by a MIMO detector 336 if applicable, and further processed by a receive processor 338 to obtain decoded data and control information sent by UE 104. Receive processor 338 may provide the decoded data to a data sink 339 and the decoded control information to controller/processor 340. Base station 102 may include communication unit 344 and communicate to location server 172 via communication unit 344. Location server 172 130 may include communication unit 394, controller/processor 390, and memory 392.

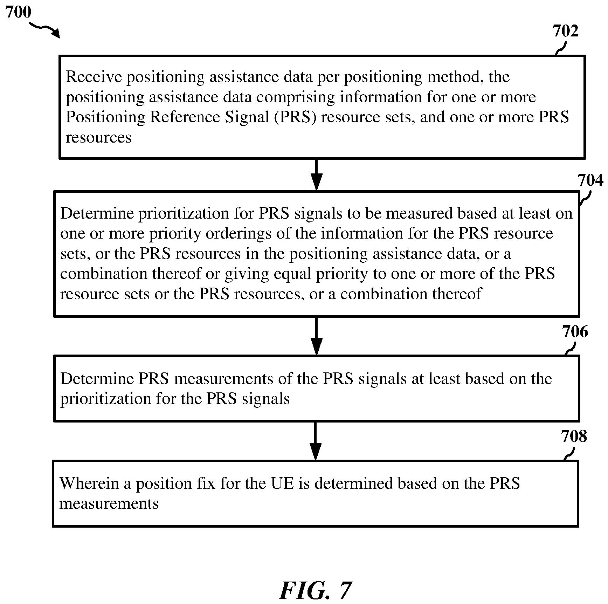

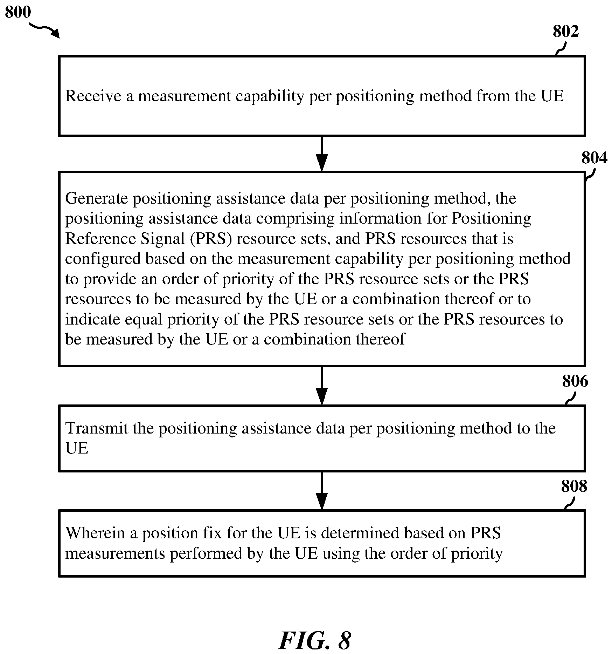

Controller/processor 340 of base station 102, controller/processor 380 of UE 104, controller/processor 380 of location server 172 and/or any other component(s) of FIG. 3 may perform one or more techniques associated with prioritization of positioning assistance data per positioning method, as described in more detail elsewhere herein. For example, controller/processor 340 of base station 102, controller/processor 380 of UE 104, controller/processor 380 of location server 172 and/or any other component(s) of FIG. 3 may perform or direct operations of, for example, process 700 of FIG. 7, process 800 of FIG. 8, and/or other processes as described herein. Memories 342, 382, 392 may store data and program codes for base station 102, UE 104, and location server 172, respectively. In some aspects, memory 342, memory 382, and/or memory 392 may comprise a non-transitory computer-readable medium storing one or more instructions for wireless communication. For example, the one or more instructions, when executed by one or more processors of the base station 102, the UE 104, and/or location server 172 may perform or direct operations of, for example, process 700 of FIG. 7, process 800 of FIG. 8, and/or other processes as described herein. A scheduler 346 may schedule UEs for data transmission on the downlink and/or uplink.

As indicated above, FIG. 3 is provided as an example. Other examples may differ from what is described with regard to FIG. 3.

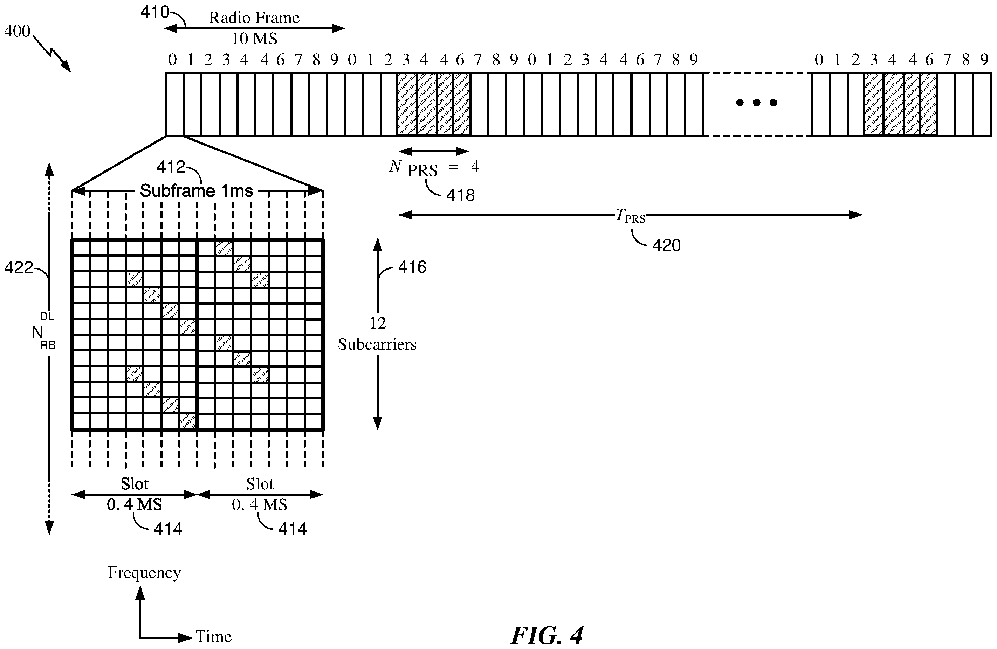

**FIG. 4** shows a structure of an exemplary subframe sequence 400 with positioning reference signal (PRS) positioning occasions, according to aspects of the disclosure. Subframe sequence 400 may be applicable to the broadcast of PRS signals from a base station (e.g., any of the base stations described herein) or other network node. The subframe sequence 400 may be used in LTE systems, and the same or similar subframe sequence may be used in other communication technologies / protocols, such as 5G and NR. In FIG. 4, time is represented horizontally (e.g., on the X axis) with time increasing from left to right, while frequency is represented vertically (e.g., on the Y axis) with frequency increasing (or decreasing) from bottom to top. As shown in FIG. 4, downlink and uplink radio frames 410 may be of 10 millisecond (ms) duration each. For downlink frequency division duplex (FDD) mode, radio frames 410 are organized, in the illustrated example, into ten subframes 412 of 1 ms duration each. Each subframe 412 comprises two slots 414, each of, for example, 0.5 ms duration.

In the frequency domain, the available bandwidth may be divided into uniformly spaced orthogonal subcarriers 416 (also referred to as "tones" or "bins"). For example, for a normal length cyclic prefix (CP) using, for example, 15 kHz spacing, subcarriers 416 may be grouped into a group of twelve (12) subcarriers. A resource of one OFDM symbol length in the time domain and one subcarrier in the frequency domain (represented as a block of subframe 412) is referred to as a resource element (RE). Each grouping of the 12 subcarriers 416 and the 14 OFDM symbols is termed a resource block (RB) and, in the example above, the number of subcarriers in the resource block may be written as $N_{SC}^{RB} = 12$. For a given channel bandwidth, the number of available resource blocks on each channel 422, which is also called the transmission bandwidth configuration 422, is indicated as $N_{RB}^{DL}$. For example, for a 3 MHz channel bandwidth in the above example, the number of available resource blocks on each channel 422 is given by $N_{RB}^{DL} = 15$. Note that the frequency component of a resource block (e.g., the 12 subcarriers) is referred to as a physical resource block (PRB).

A base station may transmit radio frames (e.g., radio frames 410), or other physical layer signaling sequences, supporting PRS signals (i.e., a downlink (DL) PRS) according to frame configurations either similar to, or the same as that, shown in FIG. 4, which may be measured and used for a UE (e.g., any of the UEs described herein) position estimation. Other types of wireless nodes (e.g., a distributed antenna system (DAS), remote radio head (RRH), UE, AP, etc.) in a wireless communications network may also be configured to transmit PRS signals configured in a manner similar to (or the same as) that depicted in FIG. 4.

A collection of resource elements that are used for transmission of PRS signals is referred to as a "PRS resource." The collection of resource elements can span multiple PRBs in the frequency domain and N (e.g., 1 or more) consecutive symbol(s) within a slot 414 in the time domain. For example, the cross-hatched resource elements in the slots 414 may be examples of two PRS resources. A "PRS resource set" is a set of PRS resources used for the transmission of PRS signals, where each PRS resource has a PRS resource identifier (ID). In addition, the PRS resources in a PRS resource set are associated with the same transmission-reception point (TRP). A PRS resource ID in a PRS resource set is associated with a single beam transmitted from a single TRP (where a TRP may transmit one or more beams). Note that this does not have any implications on whether the TRPs and beams from which signals are transmitted are known to the UE.

PRS may be transmitted in special positioning subframes that are grouped into positioning occasions. A PRS occasion is one instance of a periodically repeated time window (e.g., consecutive slot(s)) where PRS are expected to be transmitted. Each periodically repeated time window can include a group of one or more consecutive PRS occasions. Each PRS occasion can comprise a number $N_{PRS}$ of consecutive positioning subframes. The PRS positioning occasions for a cell supported by a base station may occur periodically at intervals, denoted by a number $T_{PRS}$ of milliseconds or subframes. As an example, FIG. 4 illustrates a periodicity of positioning occasions where $N_{PRS}$ equals 4 418 and $T_{PRS}$ is greater than or equal to 20 420. In some aspects, $T_{PRS}$ may be measured in terms of the number of subframes between the start of consecutive positioning occasions. Multiple PRS occasions may be associated with the same PRS resource configuration, in which case, each such occasion is referred to as an "occasion of the PRS resource" or the like.

A PRS may be transmitted with a constant power. A PRS can also be transmitted with zero power (i.e., muted). Muting, which turns off a regularly scheduled PRS transmission, may be useful when PRS signals between different cells overlap by occurring at the same or almost the same time. In this case, the PRS signals from some cells may be muted while PRS signals from other cells are transmitted (e.g., at a constant power). Muting may aid signal acquisition and time of arrival (TOA) and reference signal time difference (RSTD) measurement, by UEs, of PRS signals that are not muted (by avoiding interference from PRS signals that have been muted). Muting may be viewed as the non-transmission of a PRS for a given positioning occasion for a particular cell. Muting patterns (also referred to as muting sequences) may be signaled (e.g., using the LTE positioning protocol (LPP)) to a UE using bit strings. For example, in a bit string signaled to indicate a muting pattern, if a bit at position $j$ is set to '0', then the UE may infer that the PRS is muted for a $j^{th}$ positioning occasion.

To further improve hearability of PRS, positioning subframes may be low-interference subframes that are transmitted without user data channels. As a result, in ideally synchronized networks, PRS may be interfered with by other cells' PRS with the same PRS pattern index (i.e., with the same frequency shift), but not from data transmissions. The frequency shift may be defined as a function of a PRS ID for a cell or other transmission point (TP) (denoted as $N_{ID}^{PRS}$) or as a function of a physical cell identifier (PCI) (denoted as $N_{ID}^{cell}$) if no PRS ID is assigned, which results in an effective frequency re-use factor of six (6).

To also improve hearability of a PRS (e.g., when PRS bandwidth is limited, such as with only six resource blocks corresponding to 1.4 MHz bandwidth), the frequency band for consecutive PRS positioning occasions (or consecutive PRS subframes) may be changed in a known and predictable manner via frequency hopping. In addition, a cell supported by a base station may support more than one PRS configuration, where each PRS configuration may comprise a distinct frequency offset (*vshift*), a distinct carrier frequency, a distinct bandwidth, a distinct code sequence, and/or a distinct sequence of PRS positioning occasions with a particular number of subframes ($N_{PRS}$) per positioning occasion and a particular periodicity ($T_{PRS}$). In some implementation, one or more of the PRS configurations supported in a cell may be for a directional PRS and may then have additional distinct characteristics, such as a distinct direction of transmission, a distinct range of horizontal angles, and/or a distinct range of vertical angles.

A PRS configuration, as described above, including the PRS transmission/muting schedule, is signaled to the UE to enable the UE to perform PRS positioning measurements. The UE is not expected to blindly perform detection of PRS configurations.

Note that the terms "positioning reference signal" and "PRS" may sometimes refer to specific reference signals that are used for positioning in LTE/NR systems. However, as used herein, unless otherwise indicated, the terms "positioning reference signal" and "PRS" refer to any type of reference signal that can be used for positioning, such as but not limited to, PRS signals in LTE/NR, navigation reference signals (NRS), transmitter reference signals (TRS), cell-specific reference signals (CRS), channel state information reference signals (CSI-RS), primary synchronization signals (PSS), secondary synchronization signals (SSS), etc.

Similar to DL PRS transmitted by base stations, discussed above, a UE may transmit UL PRS for positioning. The UL PRS may be, e.g., sounding reference signals (SRS) for positioning. Using received DL PRS from base stations and/or UL PRS transmitted to base stations, the UE may perform various RAT dependent positioning measurements. LTE systems, for example, use DL PRS for Observed Time Difference of Arrival (OTDOA) positioning measurements. NR systems, on the other hand, may use DL PRS for several different kinds of RAT dependent positioning measurements, such as time difference of arrival (TDOA), angle of departure (AoD), and may use DL PRS and UL PRS jointly to perform multi-cell positioning measurements, such as multi-cell Round Trip Time (M-RTT). Other types of RAT dependent positioning measurements that may be used for a position estimate for a UE include, e.g., time of arrival (TOA), reference signal time difference (RSTD), reference signal received power (RSRP), time difference between reception and transmission of signals (Rx-Tx), or angle of arrival (AoA). Other positioning methods exist, including methods that do not rely on PRS. For example, Enhanced Cell-ID (E-CID) is based on radio resource management (RRM) measurements.

With a UE assisted position method, UE 104 may obtain location measurements and send the measurements to a location server, e.g., location server 230a, 230b, or LMF 270) for computation of a location estimate for UE 104. For example, the location measurements may include one or more of a TDOA, AOD, M-RTT, etc. With a UE based position method, UE 104 may obtain location measurements (e.g., which may be the same as or similar to location measurements for a UE assisted position method) and may compute a location of UE 104 (e.g., with the help of assistance data received from a location server such as location server 230a, 230b, or LMF 270). With a network based position method, one or more base stations 102 or APs may obtain location measurements (e.g., measurements of UL-TDOA, Rx-Tx, for signals transmitted by UE 104, and/or may receive measurements obtained by UE 104, and may send the measurements to a location server for computation of a location estimate for UE 104. The base stations 102 may provide information to the location server that may include timing and configuration information for PRS transmission and location coordinates. The location server may provide some or all of this information to the UE 104 as positioning assistance data to aid in detection and measurement of PRS signals from one or more base stations. The assistance data may further include locations of the base stations, which may be used by the UE 104 to calculate a position estimate in a UE based positioning process.

Assistance data provided for OTDOA positioning method in an LTE system and may provide a prioritization for measurement to be performed, e.g., if the UE is not capable of supporting all available neighboring cells included in the assistance data. For example, positioning assistance data for LTE OTDOA may include an information element (IE) *OTDOA-NeighbourCellInfoList.* The IE *OTDOA-NeighbourCellInfoList* may be used by the location server to provide neighbour cell information for OTDOA assistance data. If the target device, i.e., the UE receiving the assistance data, is not capable of supporting additional neighbour cells (e.g., as indicated by the absence of the IE *additionalNeighbourCellInfo-List* in *OTDOA-ProvideCapabilities*), the set of cells in the *OTDOA-NeighbourCellInfoList* may be grouped per frequency layer and in the decreasing order of priority for measurement to be performed by the target device, with the first cell in the list being the highest priority for measurement and with the same E-UTRA Absolute Radio Frequency Channel Number (*earfcn*) not appearing in more than one instance of *OTDOA-NeighbourFreqInfo.*

If the target device is capable of supporting additional neighbour cells (e.g., as indicated by the presence of the IE *additionalNeighbourCellInfoList* in *OTDOA-ProvideCapabilities*), the list may contain all cells (up to 3x24 cells) belonging to the same frequency layer or cells from different frequency layers with the first cell in the list still being the highest priority for measurement.

The prioritization of the cells in the list for LTE OTDOA is left to the location server implementation. Additionally, the target device should provide the available measurements in the same order as provided by the server.

As noted above, NR systems permit more types of positioning methods than LTE. Accordingly, for positioning in an NR system, positioning assistance data provided to a target UE may include common PRS assistance data for RAT dependent positioning, as well as positioning method specific PRS assistance data, which indexes the common PRS assistance data. For example, common PRS assistance data for RAT dependent positioning may be provided in an IE *NR-DL-PRS-AssistanceData* may be used by the location server to provide DL-PRS assistance data common to all positioning methods to the target UE. Table 1 illustrates a fragment of Abstract Syntax Notation One (ASN.1) showing the *NR-DL-PRS-AssistanceData* Information Element (IE).

```
-- ASN1START

NR-DL-PRS-AssistanceData-r16 ::= SEQUENCE {
```

```
        nr-DL-PRS-ReferenceInfo-r16        DL-PRS-IdInfo-r16   OPTIONAL,  --
                                           Need ON
        nr-DL-PRS-AssistanceDataList-r16   SEQUENCE (SIZE
                                           (1..nrMaxFreqLayers-r16)) OF
                                           NR-DL-PRS-AssistanceDataPerFreq-r16,
        nr-SSB-Config-r16     SEQUENCE (SIZE (0..255)) OF NR-SSB-Config-r16,
        ...
}
NR-DL-PRS-AssistanceDataPerFreq-r16 ::= SEQUENCE {
        nr-DL-PRS-PositioningFrequencyLayer-r16
                                       NR-DL-PRS-PositioningFrequencyLayer-r16,
        nr-DL-PRS-AssistanceDataPerFreq-r16 SEQUENCE (SIZE
                                           (1..nrMaxTRPsPerFreq-r16)) OF
                                           NR-DL-PRS-AssistanceDataPerTRP-r16,
        ...
}
NR-DL-PRS-AssistanceDataPerTRP-r16 ::= SEQUENCE {
        trp-ID-r16                         TRP-ID-r16,
        nr-DL-PRS-expectedRSTD-r16         INTEGER (-3841..3841),
        nr-DL-PRS-expectedRSTD-uncerainty-r16  INTEGER (-246..246),
        nr-DL-PRS-Config-r16               NR-DL-PRS-Config-r16,
        ...
}
NR-DL-PRS-PositioningFrequencyLayer-r16 ::= SEQUENCE {
        dl-PRS-SubcarrierSpacing-r16       ENUMERATED {kHz15,
                                   kHz30, kHz60, kHz120, ...},
        dl-PRS-ResourceBandwidth-r16       INTEGER (1..63),
        dl-PRS-StartPRB-r16                INTEGER(0..2176),
        dl-PRS-PointA-r16                  ARFCN-ValueNR-r15,
        dl-PRS-CombSizeN-r16               ENUMERATED {n2, n4, n6, n12, ...},
        dl-PRS-CyclicPrefix-r16     ENUMERATED {normal, extended, ...},
        ...
}
```

```
-- ASN1STOP
```

Table 1

In the *NR-DL-PRS-AssistanceData,* the *nr-DL-PRS-Config* field specifies the PRS configuration of the TRP. The *nr-DL-PRS-ReferenceInfo* field indicates the IDs of the reference TRP. The *nr-DL-PRS-ResourceID-List* field specifies the nr-DL PRS resource ID, where only a single nr-DL-ResourceID is included if the field is used in measurement reporting.

In an NR system, in addition to the common PRS assistance data, e.g., as described above, PRS assistance data is also provided that is positioning method specific, and which indexes the common PRS assistance data. Thus, for example, PRS assistance data that is specific for DL TDOA may be provided to the UE 104 by the location server. The IE *NR-DL-TDOA-ProvideAssistanceData* may be used by the location server to provide assistance data to enable UE-assisted and UE-based NR DL TDOA. It may also be used to provide NR DL TDOA positioning specific error reason. Table 2 illustrates a fragment of Abstract Syntax Notation One (ASN.1) showing the *NR-DL-TDOA-ProvideAssistanceData* IE.

```
-- ASN1START

NR-DL-TDOA-ProvideAssistanceData-r16 ::= SEQUENCE {

        nr-DL-PRS-AssistanceData-r16        NR-DL-PRS-AssistanceData-r16

                        OPTIONAL,   -- Need ON

        nr-SelectedDL-PRS-IndexList-r16    NR-SelectedDL-PRS-IndexList-r16

                        OPTIONAL,   -- Need ON

        nr-PositionCalculationAssistance-r16

                        NR-PositionCalculationAssistance-r16

                        OPTIONAL,   -- Cond UEB

        nr-DL-TDOA-Error-r16            NR-DL-TDOA-Error-r16

                        OPTIONAL,   -- Need ON

        ...

}
-- ASN1STOP
```

TABLE 2

In Table 2, UEB is conditionally present for UE based NR DL-TDOA, and otherwise it is not present, i.e., for UE assisted NR DL-TDOA.

In another example, PRS assistance data that is specific for DL AoD may be provided to the UE 104 by the location server. An IE *NR-DL-AoD-ProvideAssistanceData* may be used by the location server to provide assistance data to enable UE-assisted and UE-based NR-DL-AoD. It may also be used to provide NR DL AoD positioning specific error reason. Table 3 illustrates a fragment of Abstract Syntax Notation One (ASN.1) showing the *NR-DL-AoD-ProvideAssistanceData* IE.

```
-- ASN1START
NR-DL-AoD-ProvideAssistanceData-r16 ::= SEQUENCE {
        nr-DL-PRS-AssistanceData-r16        NR-DL-PRS-AssistanceData-r16
                        OPTIONAL,   -- Need ON
        nr-SelectedDL-PRS-IndexList-r16    NR-SelectedDL-PRS-IndexList-r16
                        OPTIONAL,   -- Need ON
        nr-PositionCalculationAssistance-r16
                    NR-PositionCalculationAssistance-r16
                        OPTIONAL,   -- Cond UEB
        nr-DL-AoD-Error-r16                NR-DL-AoD-Error-r16
                        OPTIONAL,   -- Need ON
        ...
}
-- ASN1STOP
```

TABLE 3

In Table 3, UEB is conditionally present for UE based NR DL-AoD, and otherwise it is not present, i.e., for UE assisted NR DL-AoD.

In another example, PRS assistance data that is specific for MRTT may be provided to the UE 104 by the location server. An *IE NR-Multi-RTT-ProvideAssistanceData* may be used by the location server to provide assistance data to enable UE-assisted NR Multi-RTT. It may also be used to provide NR Multi-RTT positioning specific error reason. Table 4 illustrates a fragment of Abstract Syntax Notation One (ASN.1) showing the *NR-Multi-RTT-ProvideAssistanceData* IE.

```
-- ASN1START


NR-Multi-RTT-ProvideAssistanceData-r16 ::= SEQUENCE {
        nr-DL-PRS-AssistanceData-r16        NR-DL-PRS-AssistanceData-r16
                                OPTIONAL,   -- Need ON
        nr-SelectedDL-PRS-IndexList-r16    NR-SelectedDL-PRS-IndexList-r16
                                OPTIONAL,   -- Need ON
        nr-Multi-RTT-Error-r16                NR-Multi-RTT-Error-r16
                                OPTIONAL,   -- Need ON

        ...

}


-- ASN1STOP
```

TABLE 4

The IE *NR-SelectedDL-PRS-IndexList* in each of the position method specific PRS assistance data shown in Tables 2, 3, and 4, may be used by the location server to provide the selected Frequency Layer index, TRP index, PRS resource set index, and resource index, of *nr-DL-PRS-AssistanceDataList* from the common PRS assistance data, e.g., *NR-DL-PRS-AssistanceData* from Table 1, to the target UE 104. Conventionally, in case of multiple positioning methods may be used, the *NR-DL-PRS-ProvideAssistanceData* may only be present in the assistance data for one of the positioning methods. Table 5 illustrates a fragment of Abstract Syntax Notation One (ASN.1) showing the *NR-SelectedDL-PRS-IndexList* IE.

```
-- ASN1START


NR-SelectedDL-PRS-IndexList-r16 ::=      SEQUENCE (SIZE
            (1..nrMaxFreqLayers-r16)) OF NR-SelectedDL-PRS-PerFreq-r16


NR-SelectedDL-PRS-PerFreq-r16 ::= SEQUENCE {
        nr-SelectedDL-PRS-FrequencyLayerIndex-r16
                        INTEGER (0..nrMaxFreqLayers-1-r16),
```

```
            nr-SelectedDL-PRS-IndexListPerFreq-r16

                          SEQUENCE (SIZE (1..nrMaxTRPsPerFreq-r16)) OF

                                  NR-SelectedDL-PRS-IndexPerTRP-r16

                                  OPTIONAL,   --Need ON

   }


NR-SelectedDL-PRS-IndexPerTRP-r16 ::= SEQUENCE {

      nr-SelectedTRP-Index-r16     INTEGER (0..nrMaxTRPsPerFreq-1-r16),

      dl-SelectedPRS-ResourceSetIndexList-r16

                          SEQUENCE (SIZE (1..nrMaxSetsPerTrp-r16)) OF

                                  DL-SelectedPRS-ResourceSetIndex-r16

                                  OPTIONAL,   --Need ON

   }


DL-SelectedPRS-ResourceSetIndex-r16 ::= SEQUENCE {

      nr-DL-SelectedPRS-ResourceSetIndex-r16          INTEGER

                          (0..nrMaxSetsPerTrp-1-r16),

      dl-SelectedPRS-ResourceIndexList-r16

                  SEQUENCE (SIZE (1..nrMaxResourcesPerSet-r16)) OF

                                  DL-SelectedPRS-ResourceIndex-r16

                                  OPTIONAL   --Need ON

   }


DL-SelectedPRS-ResourceIndex-r16 ::= SEQUENCE {

      nr-dl-SelectedPRS-ResourceIdIndex-r16          INTEGER

                          (0..nrMaxNumDL-PRS-ResourcesPerSet-1-r16),

      ...

   }
-- ASN1STOP
```

TABLE 5

Thus, the IE *SelectedDL-PRS-IndexList,* may configure the UE 104 with frequency layers, TRPs, PRS resource sets, and PRS resources, e.g., as known in the art and describe in 3GPP Technical Specification (TS) 38.214. For example, the frequency layer consists of one or more PRS resource sets and may be defined by one or more of the subcarrier spacing for the DL PRS resource, the cyclic prefix for the DL PRS resource, and the absolute frequency of the reference resource block. The UE may be configured with IDs defined such that it is associated with multiple DL PRS Resource Sets from the same cell (TRP). The PRS resource set consists of one or more DL PRS resources and may be defined by one or more of the identity of the DL PRS resource set configuration, the DL PRS resource periodicity, how many times each DL-PRS resource is repeated for a single instance of the DL-PRS resource set, the offset in number of slots between two repeated instances of a DL PRS resource with the same DL-PRS-ResourceID within a single instance of the DL PRS resource set, a muting pattern defined by a bitmap of the time locations where the DL PRS resource is expected to not be transmitted for a DL PRS resource set, the time offset of the SFN0 slot 0 for the transmitting cell, the slot offset with respect to SFN0 slot 0, the comb size of a DL PRS resource, the resource bandwidth defined by the number of resource blocks configured for PRS transmission, and the starting PRB index of the DL PRS resource with respect to reference Point A. The PRS resource may be defined by one or more of the resource lists that determine the DL PRS resources that are contained within one DL PRS resource set, the DL PRS resource configuration identity, the sequence ID used to initialize the pseudo random generator for generation of DL PRS sequence for a given DL PRS resource, the starting resource element (RE) offset of the first symbol within a DL PRS resource in frequency, the starting slot of the DL PRS resource, the starting symbol of the DL PRS resource within the starting slot, the number of symbols of the DL PRS resource within a slot, any quasi-colocation information of the DL PRS resource with other reference signals.

During a positioning session, the UE 104 may provide its positioning capability to the location server. The UE 104, for example, may provide a common DL PRS processing capability. For example, the UE 104 may indicate the duration of DL PRS symbols in units of ms the UE can process every T ms assuming a maximum DL PRS bandwidth in MHz, which is supported and reported by UE. For example, for Frequency Range 1 (FR1) (410MHz-7125MHz), the UE may support durations of {5, 10, 20, 40, 50, 80, 100} symbols, and for Frequency Range 2 (FR2) (24250 MHz-52600MHz), the UE may support durations of {50, 100, 200, 400} symbols. The UE 104 may indicate the duration of DL PRS symbol in units of ms a UE can process every T ms assuming maximum DL PRS bandwidth in MHz, which is supported and reported by UE in terms of T, which may be {8, 16, 20, 30, 40, 80, 160, 320, 640, 1280} ms, or N, which may be, {0.125, 0.25, 0.5, 1, 2, 4, 8, 12, 16, 20, 25, 30, 35, 40, 45, 50} ms. It should be noted that the UE 104 is not expected to support DL PRS bandwidth that exceeds the reported DL PRS bandwidth value. The UE DL PRS processing capability may be defined for a single positioning frequency layer. The UE DL PRS processing capability may be agnostic to DL PRS comb factor configuration. The UE may indicate the maximum number of positioning frequency layers supported by the UE across all FR1 and FR2 bands, e.g. ,as Values = {1, 2, 3, 4} The above may be reported assuming a configured measurement gap and a maximum ratio of measurement gap length (MGL) / measurement gap repetition period (MGRP) of no more than X% .

The UE 104 may further provide its PRS resource capability per method to the location server. For example, UE 104 may provide to the location server its capability for DL PRS Resources for DL-TDOA. The UE 104, for example, may indicate the maximum number of DL PRS Resource Sets per TRP per frequency layer, with values = {1, 2 }. The UE 104 may indicate the maximum number of DL PRS Resources per DL PRS Resource Set, with Values = {1, 4, 8, 16, 32, 64}. The UE 104 may indicate the maximum number of DL PRS Resources across all frequency layers, TRPs and DL PRS Resource Sets, with Values = {64, 128, 192, 256, 512, 1024, 2048}. The UE 104 may indicate the maximum number of TRPs across all positioning frequency layers per UE, with Values = [{16, 32, 64, 96, 128, 256} or {3, 12, 64, 256}]. The UE 104 may indicate the maximum number of DL PRS Resources per positioning frequency layer, with Values = {32, 64, 128, 256, 512, 1024]. The UE 104 may indicate the maximum number of TRPs per frequency layer, with Values ={8, 16, 32, 64}. The UE 104 may indicate the maximum number of DL PRS resources per TRP across all frequency layers, with Value set: {4,8,16,32,64,128}.

The UE 104 may provide to the location server its capability for DL PRS Resources for DL-AoD. The UE 104, for example, may indicate the maximum number of DL PRS Resource Sets per TRP per frequency layer supported by UE, with Values = {1,2}. The UE 104 may indicate the maximum number of DL PRS Resources per DL PRS Resource Set, with Values = {4, 8, 16, 32, 64}. The UE 104 may indicate the maximum number of DL PRS Resources supported by UE across all frequency layers, TRPs and DL PRS Resource Sets, with Values = {64, 128, 192, 256, 512, 1024, 2048}. The UE 104 may indicate the maximum number of TRPs across all positioning frequency layers per UE, with Values = [{16, 32, 64, 128, 256} or {3, 12, 64, 256}]. The UE 104 may indicate the maximum number of DL PRS Resources per positioning frequency layer, with Values = {32, 64, 128, 256, 512, 1024}. The UE 104 may indicate the maximum number of DL PRS resources per TRP across all frequency layers, with Value set: {4,8,16,32,64,128}.

The UE 104 may provide to the location server its capability for DL PRS Resources for Multi-RTT. The UE 104, for example, may indicate the maximum number of DL PRS Resource Sets per TRP per frequency layer, with Values = {1, 2}. The UE 104 may indicate the maximum number of DL PRS Resources per DL PRS Resource Set, with Values = {1, 4, 8, 16, 32, 64}. The UE 104 may indicate the maximum number of DL PRS Resources across all frequency layers, TRPs and DL PRS Resource Sets, with Values = {64, 128, 192, 256, 512, 1024, 2048}. The UE 104 may indicate the maximum number of TRPs across all positioning frequency layers per UE, with Values = [{16, 32, 64, 96, 128, 256} or {3, 12, 64, 256}]. The UE 104 may indicate the maximum number of DL PRS Resources per positioning frequency layer, with Values = {32, 64, 128, 256, 512, 1024] . The UE 104 may indicate the maximum number of DL PRS resources per TRP across all frequency layers, with Value set: {4,8,16,32,64,128}. The UE 104 may indicate the maximum number of TRPs per frequency layer, with Values ={8, 16, 32, 64}. The UE 104 may indicate the number of positioning layers the UE supports, with Values = {1, 2, 3, 4}.

In an implementation, the PRS assistance data may be defined to provide prioritization of PRS signals to be measured per RAT-dependent positioning method. For example, for each of the positioning methods, TDOA, AoD, and M-RTT, in the corresponding positioning assistance data for each positioning method, e.g., *NR-DL-TDOA-ProvideAssistanceData* in Table 2, *NR-DL-AoD-ProvideAssistanceData* in Table 3, and *NR-Multi-RTT-ProvideAssistanceData* in Table 4, respectively, the selected PRS may be grouped into *nr-SelectedDL-PRS-IndexList-r16,* based on prioritization.

In one implementation, inside each *NR-SelectedDL-PRS-PerFreq-r16* of *NR-SelectedDL-PRS-IndexList-r16,* shown in Table 5, the frequency layer may be prioritized. The frequency layer may be prioritized, e.g., by prioritizing one frequency layer over another or by giving equal priority to each frequency layer. For example, in one option, the frequency layers may be grouped in a decreasing order for measurement to be performed by the target UE 104 for each corresponding positioning method (if the UE 104 reports frequency layers per positioning method, otherwise this may be across all positioning methods). The first frequency layer in the list may have the highest priority for measurement. In another option, all frequency layers may have equal priority. If the frequency layers have equal priority, the assistance data may indicate that equal priority is to be given, or equal priority for the frequency layers may be a fixed rule that is encoded in the UE 104. If the frequency layers have equal priority, the UE 104 may select one or more TRPs from each frequency layer to perform PRS measurements and will perform PRS measurements from each selected TRP in each frequency layer before returning to a frequency layer for additional PRS measurements from different TRPs, e.g., in a round robin algorithm. When the frequency layers have equal priority, the UE 104 may select the first frequency layer for the PRS measurements based on the order provided in the assistance data or based on the frequency layer identifiers, e.g., lowest identifier is first. Thus, the UE 104 is performing PRS measurements from approximately an equal number of TRPs from each frequency layer.

In one implementation, inside each *NR-SelectedDL-PRS-PerFreq-r16* of *NR-ProvideAssistanceData-r16,* shown in Table 5, the TRPs may be prioritized. The TRPs may be prioritized, e.g., by prioritizing one TRP over another or by giving equal priority to each TRP. For example, in one option, the TRPs may be grouped in a decreasing order for measurement to be performed by the target UE 104 for the corresponding positioning method, with the first TRP in the list having the highest priority for measurement. In another option, all TRPs may have equal priority. If the TRPs have equal priority, the assistance data may indicate that equal priority is to be given, or equal priority for the TRPs may be a fixed rule that is encoded in the UE 104. If the TRPs have equal priority, the UE 104 may select one or more PRS resource sets from each TRP to perform PRS measurements and will perform PRS measurements from each selected PRS resource sets in each TRP before returning to a TRP for additional PRS measurements from different PRS resource sets, e.g., in a round robin algorithm. When the TRPs have equal priority, the UE 104 may select the TRP for the PRS measurements based on the order provided in the assistance data or based on the TRP identifiers, e.g., lowest identifier is first. Thus, the UE 104 is performing PRS measurements from approximately an equal number of PRS resource sets from each TRP.

In one implementation, inside each *DL-SelectedPRS-ResourceSetIndex-r16* of *NR-SelectedDL-PRS-PerFreq-r16,* shown in Table 5, the PRS resource sets within a TRP may be prioritized. The PRS resource sets may be prioritized, e.g., by prioritizing one PRS resource set over another or by giving equal priority to each PRS resource set. For example, in one option, the PRS resource sets may be grouped in a decreasing order for measurement to be performed by the target UE 104 for the corresponding TRP of the corresponding positioning method, with the first PRS resource set in the list being the highest priority for measurement. In another option, all PRS resource sets may have equal priority. If the PRS resource sets have equal priority, the assistance data may indicate that equal priority is to be given, or equal priority for the PRS resource sets may be a fixed rule that is encoded in the UE 104. If the PRS resource sets have equal priority, the UE 104 may select one or more PRS resources from each PRS resource set to perform PRS measurements and will perform PRS measurements from each selected PRS resources in each PRS resource set before returning to a PRS resource set for additional PRS measurements from different PRS resources, e.g., in a round robin algorithm. When the PRS resource sets have equal priority, the UE 104 may select the first PRS resource set for the PRS measurements based on the order provided in the assistance data or based on the PRS resource set identifiers, e.g., lowest identifier is first. Thus, the UE 104 is performing PRS measurements from approximately an equal number of PRS resources from each PRS resource sets.

In one implementation, inside each *DL-SelectedPRS-ResourceIndex-r16* of *DL-SelectedPRS-ResourceSetIndex-r16,* shown in Table 5, the PRS resources within a PRS resource set may be prioritized. The PRS resources may be prioritized, e.g., by prioritizing one PRS resource over another or by giving equal priority to each PRS resource. For example, in one option, the PRS resources may be grouped in a decreasing order for measurement to be performed by the target UE 104 for the corresponding PRS resource set of the corresponding TRP of the corresponding positioning method, with the first PRS resource in the list being the highest priority for measurement. In another option, all PRS resources within a PRS set may have equal priority. If the PRS resources have equal priority, the assistance data may indicate that equal priority is to be given, or equal priority for the PRS resources may be a fixed rule that is encoded in the UE 104. When the PRS resources have equal priority, the UE 104 may select the first PRS resource for the PRS measurements based on the frequency layer identifiers, e.g., lowest identifier is first.

Thus, one or more of the frequency layer, TRPs, PRS resource sets, and PRS resources may be prioritized in the assistance data per positioning method. For example, the PRS resource sets may be prioritized for positioning measurements while the frequency layers, TRPs, and PRS resources are not. In another example, the PRS resources and the PRS resource sets may be prioritized for positioning measurements while the frequency layer, and TRPs are not.

There may be different priority rules for different positioning methods. In other words, different positioning method may have different sets of "frequency layer Prioritization" or "TRP prioritization" or "PRS resource set prioritization" or "PRS resource prioritization" or any different combination thereof. For example, if there are more configured PRS resources than the UE 104 reports as the maximum number its capability report, the UE 104 may receive all PRS resources and prioritize the measurement of at least one PRS resource set from each TRP, before returning to a TRP for measurement so that the UE 104 may perform PRS measurements from approximately an equal number of TRPs from each frequency layer.

By way of example, if the UE measurement capability has a maximum number of PRS resource sets per TRP per frequency layer, and the configured PRS resource sets per TRP is more than the reported capability, the UE 104 may prioritize a first PRS resource set listed in the information for the PRS resource sets. In other words, the assistance data from the location server may list the PRS resource sets in an order to be measured, and the UE 104 may give a higher priority for measurement to the first listed PRS resource set.

In another example, if the UE measurement capability has a maximum number of PRS resources per PRS resource set, and if the configured PRS resources per PRS resource set is more than the reported capability, the UE 104 may prioritize the first PRS resources of the PRS resource set. In other words, the assistance data from the location server may list the PRS resources per PRS resource set in an order to be measured, and the UE 104 may give a higher priority for measurement to the first listed PRS resources.

In another example, if the UE measurement capability has a maximum number of PRS resources across all frequency layers, TRPs and PRS resource sets, the UE 104 may prioritize based on frequency layers, then TRPs, then the PRS resource sets, then the PRS resources, or the UE 104 may prioritize the PRS resource sets equally, e.g., prioritizing at least one PRS resource set from each TRP, before picking a second set of the same TRP.

In another example, if the UE measurement capability has a maximum number of TRPs across all positioning frequency layers per UE, the UE 104 may prioritize based on the frequency layers and then on TRPs, so that the UE first measures PRS from all TRPs of the most important frequency layer, before measuring PRS from the second frequency layer. In other words, the UE 104 may prioritize a first frequency layer and all TRPs in the first frequency layer before a second frequency layer and all TRPs in the second frequency layer. In another option, the TRPs may have equal priority and the UE 104 may measure PRS from at least one TRP from each frequency layer, and then measure PRS from a second TRP from each frequency layer, etc. In this case, UE is processing approximately equal number of TRPs per frequency layer.

In another example, if the UE measurement capability has a maximum number of PRS Resources per positioning frequency layer, the UE 104 may prioritize based on TRP, then the PRS resource sets, then the PRS resources. In other option, the UE 104 may prioritize at least one PRS resource set from each TRP, before picking a second PRS resource set of the same TRP.

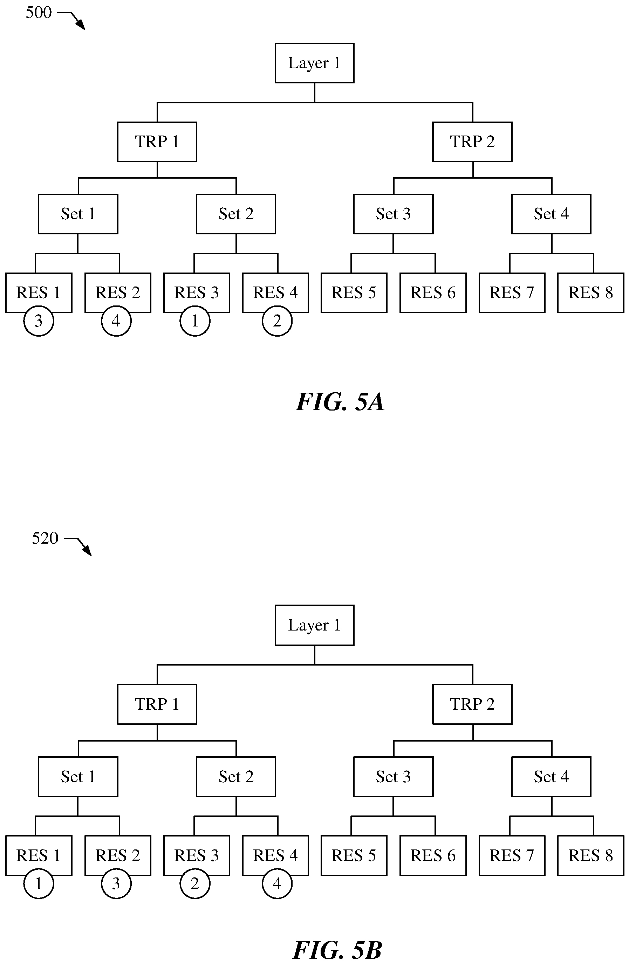

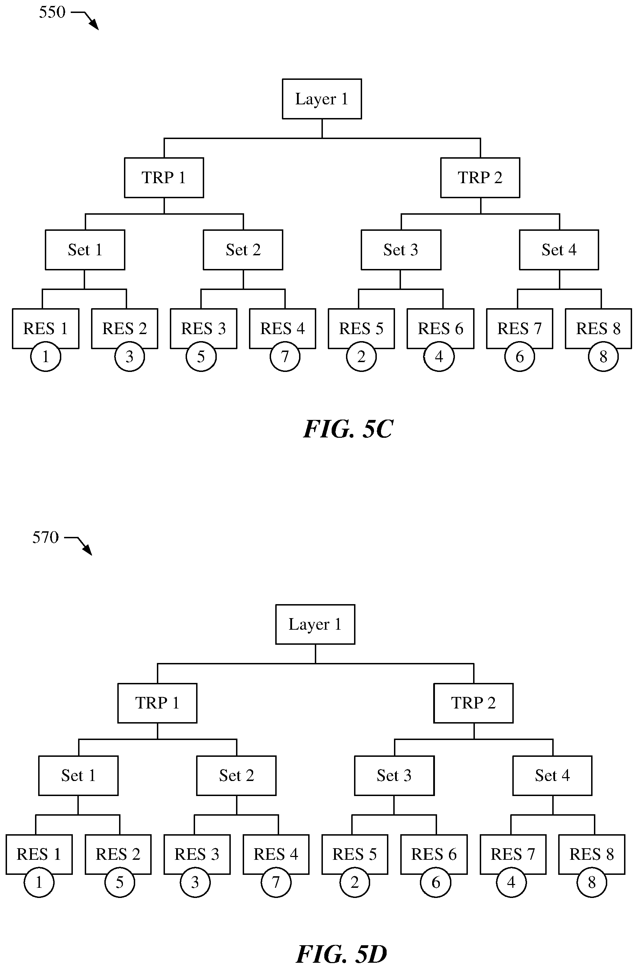

**FIGs. 5A, 5B, 5C, and 5D,** for example, illustrate a hierarchy of frequency layer, TRPs, PRS resource sets and PRS resources. Only a single frequency layer (Layer 1), is illustrated for the sake of simplicity, but it should be understood that there may be multiple frequency layers. Under the single frequency layer (Layer 1), two separate TRPs (TRP1, TRP2), are illustrated, but additional (or fewer) TRPs may be present. Under the first TRP (TRP 1), four PRS resources as illustrated, with two PRS resources (Res 1 and Res 2) under a PRS resource set (Set 1), and two PRS resources (Res 3 and Res 4) under a separate PRS resource set (Set 2). Similarly, under the second TRP (TRP 2), four PRS resources as illustrated, with two PRS resources (Res 5 and Res 6) under a PRS resource set (Set 3), and two PRS resources (Res 7 and Res 8) under another PRS resource set (Set 4). It should be understood that there may be additional (or fewer) PRS resource sets within each TRP and additional (or fewer) PRS resources within each PRS resource set. Each of the FIGs. 5A, 5B, 5C, and 5D illustrate a different prioritization of positioning measurements.

FIG. 5A, by way of example, illustrates a prioritization 500 of PRS resource sets within a TRP according to the first option, e.g., where each PRS resource set may be grouped in a decreasing order for measurement to be performed by the target UE 104 for the corresponding TRP of a particular positioning method. For example, in the positioning assistance data for a particular positioning method, the PRS resource set (Set 2) for TRP 1 may be listed before PRS resource set (Set 1) for the same TRP 1. Accordingly, the UE 104 will measure PRS signals from all PRS resources under the higher priority PRS resource set (Set 2) before measuring PRS from PRS resources under the lower priority PRS resource set (Set 1). FIG. 5A, illustrates the order of PRS measurements from PRS resource with a circle and a number indicating the order of measurement. Accordingly, based on the prioritization of the PRS resource sets, the UE 104 will perform PRS measurements first (1) from PRS resources RES 3 and (2) RES 4 under Set 2, before performing PRS measurements from (3) PRS resources RES 1 and (4) RES 2.

FIG. 5B is similar to FIG. 5A but illustrates a prioritization 520 of PRS resource sets within a TRP according to the second option, e.g., where each PRS resource set is given equal priority. For example, for a particular positioning method, the positioning assistance data may indicate that equal priority is to be given to the PRS resource sets. Accordingly, the UE 104 may select one or more PRS resources from each PRS resource set to perform PRS measurements and will perform the PRS measurements from each selected PRS resource in each PRS resource set before returning to a PRS resource set for additional PRS measurements from different PRS resources. The UE 104 may select which PRS resource set to process first, e.g., based on the order provided in the assistance data. Using a circle and number to indicate the order of measurement, FIG. 5B, for example, illustrates that based on equal prioritization, the UE 104 will perform PRS measurements first (1) from a PRS resource (RES 1) under a first PRS resource set (Set 1) before performing a second PRS measurement (2) from a second PRS resource (RES 3) under a different PRS resource set (Set 2), before returning to the first PRS resource set (Set 1) to perform PRS measurements (3) from third PRS resource (RES 2), and returning to the second PRS resource set (Set 2) to perform a PRS measurement (4) from a fourth PRS resource (RES 4).

FIG. 5C, by way of example, illustrates a prioritization 550 of TRPs within a frequency layer according to the second option, e.g., where each TRP is given equal priority, and a prioritization of PRS resource sets within a TRP according to the first option, e.g., where each PRS resource set may be grouped in a decreasing order for measurement to be performed by the target UE 104 for the corresponding TRP of a particular positioning method. Accordingly, with equal priority of TRPs, the UE 104 will select a PRS resource set from each TRP to perform PRS measurements and performs PRS measurements from each PRS resource set in each TRP before returning to a TRP for additional PRS measurements from different PRS resource sets. Additionally, each PRS resource set may be grouped in a decreasing order for measurement to be performed by the target UE 104 for the corresponding TRP of a particular positioning method. Using a circle and number to indicate the order of measurement, FIG. 5C, for example, illustrates that based on equal prioritization of TRPs and higher priorities giving to PRS resource sets, a positioning measurement may be performed (1) under a first TRP (TRP 1) using PRS resource (RES 1) under a first PRS resource set (Set 1), followed by positioning measurement (2) under a different TRP (TRP 2) using PRS resource (RES 5) under a second PRS resource set (Set 3) before revisiting the first TRP (TRP 1) for additional PRS measurements. Due to the prioritizations for PRS resource sets, PRS measurements may then be performed (3) using PRS resources (RES 2) under the first PRS resource set (Set 1), followed by measurements (4) using PRS resources (RES 6) under the second PRS resource set (Set 3). The pattern repeats using a different PRS resource set (Set 2) under the first TRP (TRP 1), and PRS resource set (Set 4) under the second TRP (TRP 2) to perform positioning measurements (5), (6), (7), and (8), using respective PRS resources (RES 3), (RES 7), (RES 4), and (RES 8).

FIG. 5D, by way of example, illustrates another prioritization 570 of TRPs within a frequency layer according to the second option, e.g., where each TRP is given equal priority, and a prioritization of PRS resource sets within a TRP according to the second option, e.g., where each PRS resource set is given equal priority. As discussed above, with equal priority of TRPs, the UE 104 will select a PRS resource set from each TRP to perform PRS measurements and performs PRS measurements from each PRS resource set in each TRP before returning to a TRP for additional PRS measurements from different PRS resource sets. Additionally, with equal priority of PRS resource sets, the UE 104 may select a PRS resource from each PRS resource set under each TRP to perform PRS measurements and will perform the PRS measurements from each selected PRS resource in each PRS resource set before returning to a PRS resource set for additional PRS measurements from different PRS resources. Using a circle and number to indicate the order of measurement, FIG. 5D, for example, illustrates that based on equal prioritization of prioritization of TRPs and PRS resource sets, a PRS measurement (1) is performed using a PRS resource (RES 1) under a first PRS resource set (Set 1) and TRP (TRP 1), followed by a PRS measurement (2) using a PRS resource (RES 5) under a second PRS resource set (Set 3) and different TRP (TRP 2), before revisiting the first TRP (TRP 1). The UE 104 the performs a positioning measurement (3) from the first TRP (TRP 1) but from a PRS resource (RES 3) under a different PRS resource set (Set 2), followed by a PRS measurement (4) using a PRS resource (RES 7) under a fourth PRS resource set (Set 4) under the second TRP (TRP 2). The pattern repeats changing TRPs and PRS resource sets using a different PRS resources to perform positioning measurements (5), (6), (7), and (8), using respective PRS resources (RES 2), (RES 6), (RES 4), and (RES 8).

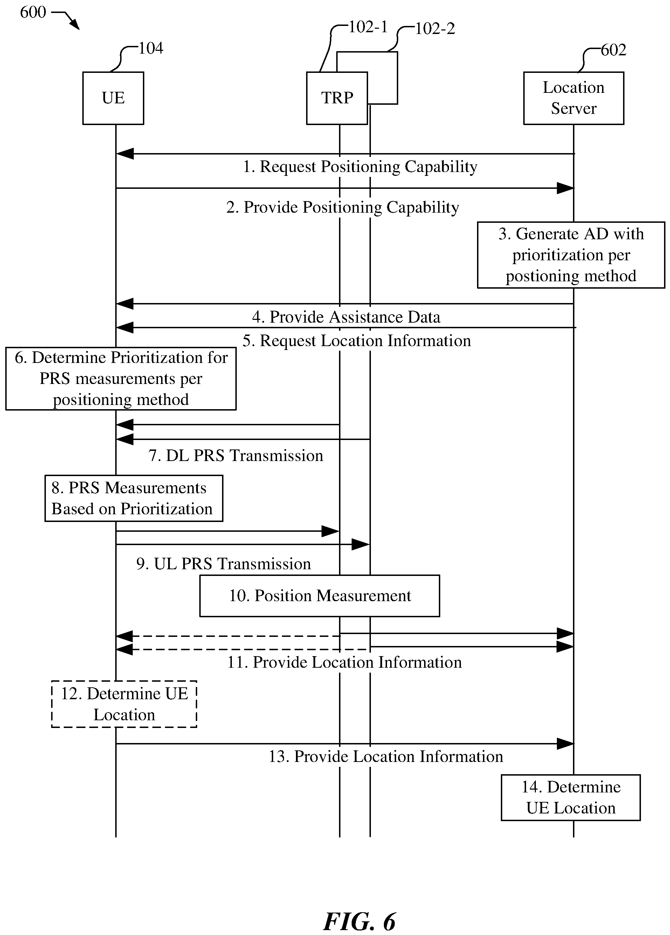

FIG. 6 shows a signaling flow 600 that illustrates various messages that may be sent between components of the wireless communication system 100 depicted in FIG. 1, in a positioning session that includes positioning assistance data prioritization per positioning method as discussed herein. Flow diagram 600 illustrates UE 104, two TRPs 102-1, and 102-2, which may be collective referred to as TRPs 102, and may be gNBs, and a location server 602, which may be, e.g., location server 172, 230a, 230b, or LMF 270. It should be understood that while a single location server 602 is illustrated in FIG. 6, multiple location servers or other entities may be used for different stages of FIG. 6. For example, a first server may receive positioning capabilities and generate and provide assistance data in stages 1, 2, 3, and 4, while a different server or other entity may receive location information and determine the UE location at stages 11, 13, and 14. While the flow diagram 600 is discussed, for ease of illustration, in relation to a 5G NR wireless access, signaling flows similar to FIG. 6 involving other types of high frequency networks and base stations will be readily apparent to those with ordinary skill in the art. In some embodiments, the UE 104 may be configured for UE based position determination or UE assisted positioning determination. FIG. 6 illustrates implementations for several different positioning methods that may be used separately or combined. For example, one or more of DL positioning methods TDOA and AoD may be performed, or combined UL and DL positioning methods, such as M-RTT may be performed. In the signaling flow 600, it is assumed that the UE 104 and location server 602 communicate using the LPP positioning protocol, although use of NPP or a combination of LPP and NPP or other future protocol, such as NRPPa, is also possible. Further, it should be understood that all messages illustrated in FIG. 6 may not be transmitted, and further, that FIG. 6 may not show all messages transmitted between entities in a positioning session.

At stage 1, the location server 602 sends a Request positioning capability message to the UE 104, e.g., to request the positioning capabilities from the UE 104.

At stage 2, the UE 104 returns a Provide Positioning Capabilities message to the location server 602 to provide the positioning capabilities of the UE 104. The UE 104, for example, may indicate its capabilities to perform different positioning measurements, as well as its capabilities with respect to, e.g., the maximum number of frequency layers, maximum number of TRPs, maximum number of PRS resource sets, maximum number of PRS resources.

At stage 3, the location server 602 may generate positioning assistance data for the UE 104 based, e.g., at least partially on the positioning capabilities of the UE 104. For example, as discussed above, the positioning assistance data may prioritize one or more of the PRS resource sets and PRS resources, which may differ based on positioning method. In some implementations, the positioning assistance data may further prioritize one or more of the frequency layers and TRPs, which may differ based on positioning method. For example, the positioning assistance data may provide information regarding the frequency layers, TRPs, PRS resource sets, and PRS resources, such as an order of measurement or whether there is equal priority. The positioning assistance data is prioritized and is per RAT dependent positioning method, such as TDOA, AoD, or M-RTT.

At stage 4, the location server 602 may send a Provide Assistance Data message to the UE 104 to provide the positioning assistance data to assist the UE 104 to acquire and measure the PRS signals and optionally determine a location from the PRS measurements. The assistance data, for example, may include a set of common PRS assistance data, and separate sets of PRS assistance data per positioning method, which may index the common PRS assistance data.

At stage 5, the location server 602 may send a Request Location Information message to the UE 104 to request the UE 104 to measure DL PRS transmission by the TRPs 102, e.g., for DL positioning methods, such as TDOA, or AoD, and in some cases to transmit UL PRS, e.g., SRS, for measurement by the TRPs in a combined DL and UL positioning method, such as M-RTT. The location server 602 may also indicate whether UE based positioning is requested whereby the UE 104 determines its own location, or UE assisted positioning.

At stage 6, the UE 104 may determine the prioritization for PRS signals to be measured based at least on one or more orderings of the information for the PRS resource sets or the PRS resources in the positioning assistance data, or a combination thereof. In some implementations, the UE 104 may determine the prioritization for PRS signals to be measured based on one or more orderings of the information for the frequency layers, the TRPs, the PRS resource sets, or the PRS resources in the positioning assistance data, or a combination thereof.

At stage 7, the TRPs 102 transmit PRS signals.

At stage 8, the UE 104 determines the PRS measurements for PRS received from the TRPs 102 at stage 7 according to the prioritization for the PRS signals. The UE 104, for example, may measure TDOA and AoD.

At stage 9, the UE 104 may transmit UL PRS signals, e.g., SRS, e.g., if a multi-RTT positioning method is used.

At stage 10, the TRPs 102 may acquire the PRS transmitted by the UE 104 at stage 9 and perform the desired position measurements. The base stations 102 for example, may measure Rx-Tx, TOA, etc., which may be used in the M-RTT positioning method.

At stage 11, the TRPs 102 may send a Provide Location Information message to the location server 602 and includes the PRS measurements (and any other measurements) obtained at stage 9, if performed. In some implementations, e.g., where DL and UL based positioning methods are used, the base station may send the Provide Location Information message to the UE 104, as illustrated with dotted lines.

At stage 12, if UE 104 based positioning was requested at stage 5, the UE 104 may determine its location based on the PRS measurements (and any other measurements) obtained at stage 8 and the assistance data received at stage 4, and the Provide Location Information message from the base station at stage 11, if used.

At stage 13, the UE 104 may send a Provide Location Information message to the location server 602 that may include the PRS measurements (and any other measurements) obtained at stage 8 and/or the UE location obtained at stage 12.

At stage 14, the location server 602 determines the UE location based on any PRS measurements (and any other measurements) received at one or more of stage 13, stage 11, or the combination of stage 13 and stage 11, or may verify a UE location received at stage 13. Alternatively, other entity in the wireless network, for example another server, may also be used to determine the UE location based on any PRS measurements.

**FIG. 7** shows a flowchart for an exemplary method 700 performed by a UE in a wireless network wireless for position determination of the UE, such as UE 104 in wireless communications system 100.

At block 702, the UE may receive positioning assistance data per positioning method, the positioning assistance data comprising information for one or more one or more Positioning Reference Signal (PRS) resource sets, and one or more PRS resources, for example, as illustrated at stages 3 and 4 of FIG. 6. At block 704, the UE may determine prioritization for PRS signals to be measured based at least on one or more priority orderings of the information for the PRS resource sets or the PRS resources in the positioning assistance data, or a combination thereof or give equal priority to one or more of the PRS resource sets or the PRS resources, or a combination thereof, e.g., as illustrated at stage 6 of FIG. 6. At block 706, the UE may determine PRS measurements of the PRS signals at least based on the prioritization for the PRS signals, e.g., as illustrated at stages 7 and 8 of FIG. 6. At block 708, a position fix for the UE is determined based on the PRS measurements, e.g., as discussed at stages 12 or 14 of FIG. 6.

For example, in some implementations, the UE may report measurement information based on the PRS measurements to an entity in the wireless network, wherein the position fix for the UE may be determined by the entity in the wireless network, e.g., as illustrated at stages 13 and 14 of FIG. 6. In some implementations, the position fix for the UE may be determined by the UE, e.g., as illustrated at stage 12 of FIG. 6.

In one implementation, wherein the positioning assistance data is per Radio Access Technology (RAT) dependent positioning method. For example, the positioning assistance data per positioning method comprises separate positioning assistance data for Angle of Departure (AOD), Time Difference of Arrival (TDOA), and Multi Cell Round Trip Time (M-RTT), e.g., as illustrated at stage 3 of FIG. 6.

In one implementation, the positioning assistance data per positioning method may include indices to a set of common PRS assistance data, e.g., as illustrated in Tables 1-5.

In one implementation, for each positioning method, the information for the one or more PRS resource sets of a transmission point (TRP) in the positioning assistance data lists the PRS resource sets in a priority order of measurement to be performed by the UE, e.g., as illustrated in stage 6 of FIG. 6 and FIGs. 5A and 5B. Additionally, in some implementations, the positioning assistance data may further comprise information for one or more frequency layers and one or more TRPs, and for each positioning method, the information may further list the frequency layers in a priority order of measurement to be performed by the UE, or list the TRPs within each frequency layer in a priority order of measurement to be performed by the UE, or list a combination thereof.

In one implementation, for each positioning method, the information for the one or more PRS resources of a PRS resource set in the positioning assistance data lists the PRS resources in a priority order of measurement to be performed by the UE.

In one implementation, the positioning assistance data may further comprise information for one or more frequency layers and one or more transmission points (TRPs), and the UE may further report one or more measurement capabilities per positioning method to the entity in the wireless network, e.g., as discussed at stage 2 of FIG. 6. The information for the frequency layers, the TRPs, the PRS resource sets, and the PRS resources in the positioning assistance data may be based on the one or more measurement capabilities per positioning method, e.g., as discussed at stage 3 of FIG. 6. In one example, the one or more measurement capabilities per positioning method indicates a maximum number of PRS resource sets per TRP per frequency layer, and wherein determining the prioritization for PRS measurements comprises prioritizing a first PRS resource set listed in the information for the PRS resource sets. In one example, the one or more measurement capabilities per positioning method indicates a maximum number of PRS resources per PRS resource set, and wherein determining the prioritization for PRS measurements comprises prioritizing a first PRS resource listed in the information for the PRS resources. In one example, the one or more measurement capabilities per positioning method indicates a maximum number of PRS resources across all frequency layers, TRPs, and PRS resource sets, and wherein determining the prioritization for PRS measurements comprises one of prioritizing based on frequency layers, then TRPs, then PRS resource sets, then PRS resources; or prioritizing a first PRS resource set from each TRP, then a second PRS resource set from each TRP. In one example, the one or more measurement capabilities per positioning method indicates a maximum number of TRPs across all frequency layers, and wherein determining the prioritization for PRS measurements comprises prioritizing a first frequency layer and all TRPs in the first frequency layer before a second frequency layer and all TRPs in the second frequency layer; or prioritizing a first TRP from each frequency layer, then a second TRP from each frequency layer. In one example, the one or more measurement capabilities per positioning method indicates a maximum number of PRS resources per frequency layer, and wherein determining the prioritization for PRS measurements comprises one of prioritizing based on TRP, then PRS resource sets, then PRS resources; or prioritizing a first PRS resource set from each TRP, then a second PRS resource set from each TRP.

**FIG. 8** shows a flowchart for an exemplary method 800 performed by a location server in a wireless network wireless for position determination of a UE in the wireless network wireless, such as UE 104 and location server 172 in wireless communications system 100.

At block 802, the location server may receive a measurement capability per positioning method from the UE, e.g.,

as discussed at stage 2 of FIG. 6. At block 804, positioning assistance data per positioning method is generated, the positioning assistance data comprising information for Positioning Reference Signal (PRS) resource sets, and PRS resources that is configured based on the measurement capability per positioning method to provide an order of priority of the PRS resource sets or the PRS resources to be measured by the UE or a combination thereof or to indicate equal priority of the PRS resource sets or the PRS resources to be measured by the UE or a combination thereof, e.g., as discussed at stage 3 of FIG. 6. At block 806, the positioning assistance data per positioning method is transmitted to the UE, e.g., as discussed at stage 4 of FIG. 6. At block 808, a position fix for the UE is determined based on PRS measurements performed by the UE using the order of priority, e.g., as discussed at stages 12 or 14 of FIG. 6.

In some implementations, the location server may receive measurement information from the UE based on the PRS measurements, wherein the position fix for the UE is determined by the location server, e.g., as discussed at stages 13 and 14 of FIG. 6. In some implementations, the position fix for the UE may be determined by the UE, e.g., as discussed at stage 12 of FIG. 6.

In one implementation, the positioning assistance data is per Radio Access Technology (RAT) dependent positioning method, e.g., as discussed at stage 3 of FIG. 6. For example, the positioning assistance data per positioning method may be separate positioning assistance data for Angle of Departure (AOD), Time Difference of Arrival (TDOA), and Multi Cell Round Trip Time (M-RTT), e.g., as discussed at stage 3 of FIG. 6.

In one implementation, a set of common PRS assistance data is transmitted to the UE, wherein the positioning assistance data per positioning method comprises indices to the set of common PRS assistance data, e.g., as discussed at stages 3 and 4 of FIG. 6.

In one implementation, for each positioning method, the information for the PRS resource sets in the positioning assistance data lists the PRS resource sets in an order of measurement to be performed by the UE, e.g., as discussed at stage 6 of FIG. 6 and FIGs. 5A and 5B. For example, in some implementations, the positioning assistance data may further comprise information for frequency layers and transmission points (TRPs), and for each positioning method, the information may further list the frequency layers in a priority order of measurement to be performed by the UE, or list the TRPs within each frequency layer in a priority order of measurement to be performed by the UE, or list a combination thereof.

In one implementation, for each positioning method, the information for the PRS resources in the positioning assistance data lists the PRS resources in an order of measurement to be performed by the UE or the PRS resources have equal priority.

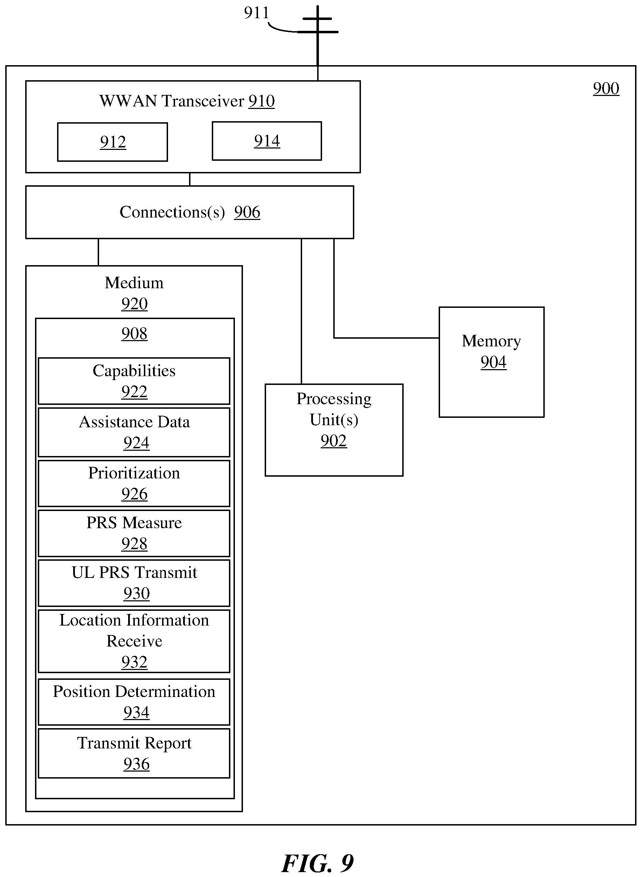

**FIG. 9** shows a schematic block diagram illustrating certain exemplary features of a UE 900, e.g., which may be UE 104 shown in FIG. 1, enabled to support positioning using prioritized positioning assistance data per positioning method, as discussed herein. UE 900 may, for example, include one or more processors 902, memory 904, an external interface such as a wireless transceiver 910 (e.g., wireless network interface), which may be operatively coupled with one or more connections 906 (e.g., buses, lines, fibers, links, etc.) to non-transitory computer readable medium 920 and memory 904. The UE 900 may further include additional items, which are not shown, such as a user interface that may include e.g., a display, a keypad or other input device, such as virtual keypad on the display, through which a user may interface with the UE, or a satellite positioning system receiver. In certain example implementations, all or part of UE 900 may take the form of a chipset, and/or the like. Wireless transceiver 910 may, for example, include a transmitter 912 enabled to transmit one or more signals over one or more types of wireless communication networks and a receiver 914 to receive one or more signals transmitted over the one or more types of wireless communication networks.

In some embodiments, UE 900 may include antenna 911, which may be internal or external. UE antenna 911 may be used to transmit and/or receive signals processed by wireless transceiver 910. In some embodiments, UE antenna 911 may be coupled to wireless transceiver 910. In some embodiments, measurements of signals received (transmitted) by UE 900 may be performed at the point of connection of the UE antenna 911 and wireless transceiver 910. For example, the measurement point of reference for received (transmitted) RF signal measurements may be an input (output) terminal of the receiver 914 (transmitter 912) and an output (input) terminal of the UE antenna 911. In a UE 900 with multiple UE antennas 911 or antenna arrays, the antenna connector may be viewed as a virtual point representing the aggregate output (input) of multiple UE antennas. UE 900 may receive signals, e.g., DL PRS, and/or transmit UL PRS or SRS for positioning. Measurements of signals, including one or more of timing measurements, such RSTD, UE Rx-Tx, TOA, TDOA, AoD, M-RTT, etc., energy measurements, such as RSRP, quality metrics, velocity and/or trajectory measurements, reference TRP, multipath information, line of sight (LOS) or non-line of sight (NLOS) factors, signal to interference noise ratio (SINR), and time stamps may be processed by the one or more processors 902.

The one or more processors 902 may be implemented using a combination of hardware, firmware, and software. For example, the one or more processors 902 may be configured to perform the functions discussed herein by implementing one or more instructions or program code 908 on a non-transitory computer readable medium, such as medium 920 and/or memory 904. In some embodiments, the one or more processors 902 may represent one or more circuits configurable to perform at least a portion of a data signal computing procedure or process related to the operation of UE 900.

The medium 920 and/or memory 904 may store instructions or program code 908 that contain executable code or software instructions that when executed by the one or more processors 902 cause the one or more processors 902 to operate as a special purpose computer programmed to perform the techniques disclosed herein. As illustrated in UE 900, the medium 920 and/or memory 904 may include one or more components or modules that may be implemented by the one or more processors 902 to perform the methodologies described herein. While the components or modules are illustrated as software in medium 920 that is executable by the one or more processors 902, it should be understood that the components or modules may be stored in memory 904 or may be dedicated hardware either in the one or more processors 902 or off the processors.

A number of software modules and data tables may reside in the medium 920 and/or memory 904 and be utilized by the one or more processors 902 in order to manage both communications and the functionality described herein. It should be appreciated that the organization of the contents of the medium 920 and/or memory 904 as shown in UE 900 is merely exemplary, and as such the functionality of the modules and/or data structures may be combined, separated, and/or be structured in different ways depending upon the implementation of the UE 900.

The medium 920 and/or memory 904 may include a capabilities module 922 that when implemented by the one or more processors 902 configures the one or more processors 902 to transmit, via the wireless transceiver 910, measurement capabilities per positioning method to a location server or other entity.

The medium 920 and/or memory 904 may include an assistance data module 924 that when implemented by the one or more processors 902 configures the one or more processors 902 to receive, via the wireless transceiver 910, positioning assistance data from, e.g., a location server. The positioning assistance data may include information for one or more frequency layers, one or more TRPs, one or more PRS resource sets, and one or more PRS resources, such as an order of priority for measurement or an indication of equal priority. The assistance data may include a common PRS assistance data for all positioning methods and position method specific assistance data, which may index the common PRS assistance data.

The medium 920 and/or memory 904 may include a prioritization module 926 that when implemented by the one or more processors 902 configures the one or more processors 902 to prioritize, e.g., the PRS resource sets or PRS resources for PRS measurements, or a combination thereof, e.g., based on the information included in the positioning assistance and the positioning method to be performed or based on information encoded, e.g., in medium 902 or memory 904, indicating that equal priority is to be given to one or more of the PRS resource sets or the PRS resources, or a combination thereof. The one or more processors 902 may be further configured to prioritize the frequency layers or TRPs or combination thereof. Prioritization, for example, may be indicated by listing the PRS resource sets or PRS resources, or in some implementations, the frequency layers or TRPS, or a combination thereof, in a priority order of measurement.

The medium 920 and/or memory 904 may include a PRS measure module 928 that when implemented by the one or more processors 902 configures the one or more processors 902 to receive, via the wireless transceiver 910, DL PRS signals from one or more TRPs and to determine PRS measurements based at least based on the prioritization of the PRS signals. For example, the one or more processors 902 may be configured to perform DL positioning measurements for one or more positioning methods based on received DL PRS, UL positioning measurements for one or more positioning methods based on the received DL PRS or DL and UL positioning measurements for one or more positioning methods based on the received DL PRS and the transmitted UL PRS. Multiple positioning measurements may be performed, e.g., the same type of positioning measurements may be performed at different times and/or different types of positioning measurements may be performed at the same time or at different times. The positioning measurements may be for one or more positioning methods, such as TDOA, AoD, multi-RTT, hybrid positioning methods, etc. By way of example, the one or more processors 902 may be configured for positioning measurements including one or more of, timing measurements such as RSTD, UE Rx-Tx, TOA, etc., energy measurements such as RSRP, quality metrics, velocity and/or trajectory measurements, reference TRP, multipath information, LOS/NLOS factors, SINR, and time stamps. In some implementations, the one or more processors 902 may be further configured to estimate a position of the UE 900 in a UE based positioning process using the position measurements and the locations of base stations, e.g., received in assistance data.

The medium 920 and/or memory 904 may include a UL PRS transmit module 930 that when implemented by the one or more processors 902 configures the one or more processors 902 to transmit, via the wireless transceiver 910, UL PRS or SRS for positioning.

The medium 920 and/or memory 904 may include a location information receive module 932 that when implemented by the one or more processors 902 configures the one or more processors 902 to receive, via the wireless transceiver 910, location information from TRPs related to measurements of the transmitted UL PRS or SRS for positioning.

The medium 920 and/or memory 904 may include a position determination module 934 that when implemented by the one or more processors 902 configures the one or more processors 902 to determine a position estimate based on the position measurements and the received location information from the TRPs (if any), as well as information provided in the assistance data, such as the positions of the TRPs.

The medium 920 and/or memory 904 may include a transmit report element module 936 that when implemented by the one or more processors 902 configures the one or more processors 902 to transmit to a location server, via the wireless transceiver 910, the PRS measurements and/or a determined position estimate.

The methodologies described herein may be implemented by various means depending upon the application. For example, these methodologies may be implemented in hardware, firmware, software, or any combination thereof. For a hardware implementation, the one or more processors 902 may be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, electronic devices, other electronic units designed to perform the functions described herein, or a combination thereof.

For a firmware and/or software implementation, the methodologies may be implemented with modules (e.g., procedures, functions, and so on) that perform the functions described herein. Any machine readable medium tangibly embodying instructions may be used in implementing the methodologies described herein. For example, software codes may be stored in a non-transitory computer readable medium 920 or memory 904 that is connected to and executed by the one or more processors 902. Memory may be implemented within the one or more processors or external to the one or more processors. As used herein the term "memory" refers to any type of long term, short term, volatile, nonvolatile, or other memory and is not to be limited to any particular type of memory or number of memories, or type of media upon which memory is stored.

If implemented in firmware and/or software, the functions may be stored as one or more instructions or program code 908 on a non-transitory computer readable medium, such as medium 920 and/or memory 904. Examples include computer readable media encoded with a data structure and computer readable media encoded with a computer program 908. For example, the non-transitory computer readable medium including program code 908 stored thereon may include program code 908 to support positioning using assistance data prioritization per method, in a manner consistent with disclosed embodiments. Non-transitory computer readable medium 920 includes physical computer storage media. A storage medium may be any available medium that can be accessed by a computer. By way of example, and not limitation, such non-transitory computer readable media can comprise RAM, ROM, EEPROM, CD-ROM or other optical disk storage, magnetic disk storage or other magnetic storage devices, or any other medium that can be used to store desired program code 908 in the form of instructions or data structures and that can be accessed by a computer; disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer readable media.

In addition to storage on computer readable medium 920, instructions and/or data may be provided as signals on transmission media included in a communication apparatus. For example, a communication apparatus may include a wireless transceiver 910 having signals indicative of instructions and data. The instructions and data are configured to cause one or more processors to implement the functions outlined in the claims. That is, the communication apparatus includes transmission media with signals indicative of information to perform disclosed functions.

Memory 904 may represent any data storage mechanism. Memory 904 may include, for example, a primary memory and/or a secondary memory. Primary memory may include, for example, a random access memory, read only memory, etc. While illustrated in this example as being separate from one or more processors 902, it should be understood that all or part of a primary memory may be provided within or otherwise co-located/coupled with the one or more processors 902. Secondary memory may include, for example, the same or similar type of memory as primary memory and/or one or more data storage devices or systems, such as, for example, a disk drive, an optical disc drive, a tape drive, a solid-state memory drive, etc.

In certain implementations, secondary memory may be operatively receptive of, or otherwise configurable to couple to a non-transitory computer readable medium 920. As such, in certain example implementations, the methods and/or apparatuses presented herein may take the form in whole or part of a computer readable medium 920 that may include computer implementable code 908 stored thereon, which if executed by one or more processors 902 may be operatively enabled to perform all or portions of the example operations as described herein. Computer readable medium 920 may be a part of memory 904.

In one implementation, a UE, such as UE 900, may be configured to support position determination and may include a means for receiving positioning assistance data per positioning method, the positioning assistance data comprising information for one or more Positioning Reference Signal (PRS) resource sets, and one or more PRS resources, which may be, e.g., the wireless transceiver 910 and one or more processors 902 with dedicated hardware or implementing executable code or software instructions in memory 904 and/or medium 920 such as the assistance data module 924. A means for determining prioritization for PRS signals to be measured based at least on one or more priority orderings of the information for the PRS resource sets, or the PRS resources in the positioning assistance data, or a combination thereof or giving equal priority to one or more of the PRS resource sets or the PRS resources, or a combination thereof may be, e.g., the one or more processors 902 with dedicated hardware or implementing executable code or software instructions in memory 904 and/or medium 920 such as the prioritization module 926. A means for determining PRS measurements of the PRS signals at least based on the prioritization for the PRS signals may be, e.g., the wireless transceiver 910 and one or more processors 902 with dedicated hardware or implementing executable code or software instructions in memory 904 and/or medium 920 such as the PRS measure module 928. A means for reporting measurement information or positioning fix information based on the PRS measurements to an entity in the wireless network may be, e.g., the wireless transceiver 910 and one or more processors 902 with dedicated hardware or implementing executable code or software instructions in memory 904 and/or medium 920 such as the transmit report module 936.

In one implementation, the positioning assistance data may further comprise information for one or more frequency layers and one or more transmission points (TRPs), and the UE may further include a means for reporting one or more measurement capabilities per positioning method to the entity in the wireless network, and the information for the frequency layers, the TRPs, the PRS resource sets, and the PRS resources in the positioning assistance data is configured based on the one or more measurement capabilities per positioning method, which may be, e.g., the wireless transceiver 910 and one or more processors 902 with dedicated hardware or implementing executable code or software instructions in memory 904 and/or medium 920 such as the capabilities module 922.

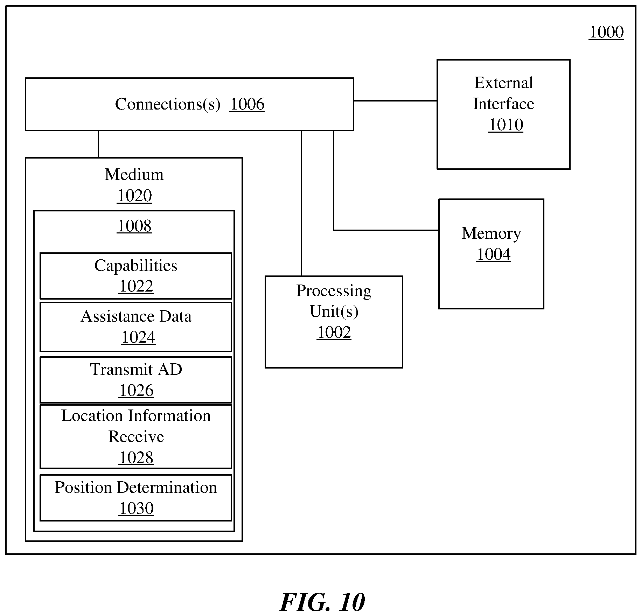

**FIG. 10** shows a schematic block diagram illustrating certain exemplary features of a location server 1000 in a wireless network enabled to support positioning using prioritized positioning assistance data per positioning method, as discussed herein. The location server 1000, for example, may be a location server 172, which may be, e.g., location server 230a, 230b or LMF 270 in FIGs. 1, 2A, and 2B. The location server 1000 may, for example, include one or more processors 1002, memory 1004, and an external interface, which may include an external interface 1010 for communications (e.g., wireline or wireless network interface to other network entities and/or the core network), which may be operatively coupled with one or more connections 1006 (e.g., buses, lines, fibers, links, etc.) to non-transitory computer readable medium 1020 and memory 1004. In some implementations, the location server 1000 may further include additional items, which are not shown, such as a user interface that may include e.g., a display, a keypad or other input device, such as virtual keypad on the display, through which a user may interface with the network entity. In certain example implementations, all or part of location server 1000 may take the form of a chipset, and/or the like. The external interface 1010 may be a wired or wireless interface capable of connecting to other base stations, e.g., in the RAN or network entities, such as a location server 172 shown in FIG. 1.

The one or more processors 1002 may be implemented using a combination of hardware, firmware, and software. For example, the one or more processors 1002 may be configured to perform the functions discussed herein by implementing one or more instructions or program code 1008 on a non-transitory computer readable medium, such as medium 1020 and/or memory 1004. In some embodiments, the one or more processors 1002 may represent one or more circuits configurable to perform at least a portion of a data signal computing procedure or process related to the operation of location server 1000.

The medium 1020 and/or memory 1004 may store instructions or program code 1008 that contain executable code or software instructions that when executed by the one or more processors 1002 cause the one or more processors 1002 to operate as a special purpose computer programmed to perform the techniques disclosed herein. As illustrated in location server 1000, the medium 1020 and/or memory 1004 may include one or more components or modules that may be implemented by the one or more processors 1002 to perform the methodologies described herein. While the components or modules are illustrated as software in medium 1020 that is executable by the one or more processors 1002, it should be understood that the components or modules may be stored in memory 1004 or may be dedicated hardware either in the one or more processors 1002 or off the processors.

A number of software modules and data tables may reside in the medium 1020 and/or memory 1004 and be utilized by the one or more processors 1002 in order to manage both communications and the functionality described herein. It should be appreciated that the organization of the contents of the medium 1020 and/or memory 1004 as shown in location server 1000 is merely exemplary, and as such the functionality of the modules and/or data structures may be combined, separated, and/or be structured in different ways depending upon the implementation of the location server 1000.

The medium 1020 and/or memory 1004 may include a capabilities module 1022 that when implemented by the one or more processors 1002 configures the one or more processors 1002 to receive, via the external interface 1010, measurement capabilities per positioning method for the UE.

The medium 1020 and/or memory 1004 may include an assistance data module 1024 that when implemented by the one or more processors 1002 configures the one or more processors 1002 to generate positioning assistance data based at least in part on the capabilities of the UE. The positioning assistance data may include information for one or more frequency layers, one or more TRPs, one or more PRS resource sets, and one or more PRS resources. The positioning assistance data may be based on the measurement capability per positioning method and may provide an order of priority of the PRS resource sets or the PRS resources to be measured by the UE or a combination thereof or to indicate equal priority of the PRS resource sets or the PRS resources to be measured by the UE or a combination thereof. In some implementations, the priority of the frequency layers or TRPs, or a combination thereof may be additionally be provided.

Prioritization, for example, may be indicated by listing the PRS resource sets or PRS resources, or in some implementations, the frequency layers or TRPS, or a combination thereof, in a priority order of measurement. The assistance data may include a common PRS assistance data for all positioning methods and position method specific assistance data, which may index the common PRS assistance data.

The medium 1020 and/or memory 1004 may include a transmit AD module 1026 that when implemented by the one or more processors 1002 configures the one or more processors 1002 to transmit, via the external interface 1010, the positioning assistance data to the UE 104.

The medium 1020 and/or memory 1004 may include a location information receive module 1028 that when implemented by the one or more processors 1002 configures the one or more processors 1002 to receive, via the external interface 1010, location information from the UE 104 and/or TRPs related to PRS measurements for DL PRS that were measured using the order of priority and UL PRS or SRS for positioning if used, and/or a position estimate determined by the UE.

The medium 1020 and/or memory 1004 may include a position determination module 1030 that when implemented by the one or more processors 1002 configures the one or more processors 1002 to determine a position estimate based on the position measurements and the received location information from the UE and TRPs (if any).

The methodologies described herein may be implemented by various means depending upon the application. For example, these methodologies may be implemented in hardware, firmware, software, or any combination thereof. For a hardware implementation, the one or more processors 1002 may be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, electronic devices, other electronic units designed to perform the functions described herein, or a combination thereof.

For a firmware and/or software implementation, the methodologies may be implemented with modules (e.g., procedures, functions, and so on) that perform the functions described herein. Any machine readable medium tangibly embodying instructions may be used in implementing the methodologies described herein. For example, software codes may be stored in a non-transitory computer readable medium 1020 or memory 1004 that is connected to and executed by the one or more processors 1002. Memory may be implemented within the one or more processors or external to the one or more processors. As used herein the term "memory" refers to any type of long term, short term, volatile, nonvolatile, or other memory and is not to be limited to any particular type of memory or number of memories, or type of media upon which memory is stored.

If implemented in firmware and/or software, the functions may be stored as one or more instructions or program code 1008 on a non-transitory computer readable medium, such as medium 1020 and/or memory 1004. Examples include computer readable media encoded with a data structure and computer readable media encoded with a computer program 1008. For example, the non-transitory computer readable medium including program code 1008 stored thereon may include program code 1008 to support positioning using assistance data prioritization per method, in a manner consistent with disclosed embodiments. Non-transitory computer readable medium 1020 includes physical computer storage media. A storage medium may be any available medium that can be accessed by a computer. By way of example, and not limitation, such non-transitory computer readable media can comprise RAM, ROM, EEPROM, CD-ROM or other optical disk storage, magnetic disk storage or other magnetic storage devices, or any other medium that can be used to store desired program code 1008 in the form of instructions or data structures and that can be accessed by a computer; disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer readable media.

In addition to storage on computer readable medium 1020, instructions and/or data may be provided as signals on transmission media included in a communication apparatus. For example, a communication apparatus may include an external interface 1010 having signals indicative of instructions and data. The instructions and data are configured to cause one or more processors to implement the functions outlined in the claims. That is, the communication apparatus includes transmission media with signals indicative of information to perform disclosed functions.

Memory 1004 may represent any data storage mechanism. Memory 1004 may include, for example, a primary memory and/or a secondary memory. Primary memory may include, for example, a random-access memory, read only memory, etc. While illustrated in this example as being separate from one or more processors 1002, it should be understood that all or part of a primary memory may be provided within or otherwise co-located/coupled with the one or more processors 1002. Secondary memory may include, for example, the same or similar type of memory as primary memory and/or one or more data storage devices or systems, such as, for example, a disk drive, an optical disc drive, a tape drive, a solid-state memory drive, etc.

In certain implementations, secondary memory may be operatively receptive of, or otherwise configurable to couple to a non-transitory computer readable medium 1020. As such, in certain example implementations, the methods and/or apparatuses presented herein may take the form in whole or part of a computer readable medium 1020 that may include computer implementable code 1008 stored thereon, which if executed by one or more processors 1002 may be operatively enabled to perform all or portions of the example operations as described herein. Computer readable medium 1020 may be a part of memory 1004.

In one implementation, a location server, such as location server 1000, may be configured to support position determination of a user equipment (UE) and may include a means for receiving a measurement capability per positioning method from the UE, which may be, e.g., the external interface 1010 and one or more processors 1002 with dedicated hardware or implementing executable code or software instructions in memory 1004 and/or medium 1020 such as the capabilities module 1022. A means for generating positioning assistance data per positioning method, the positioning assistance data comprising information for Positioning Reference Signal (PRS) resource sets, and PRS resources that is configured based on the measurement capability per positioning method to provide an order of priority of the PRS resource sets or the PRS resources to be measured by the UE or a combination thereof or to indicate equal priority of the PRS resource sets or the PRS resources to be measured by the UE or a combination thereof may be, e.g., the one or more processors 1002 with dedicated hardware or implementing executable code or software instructions in memory 1004 and/or medium 1020 such as the assistance data module 1024. A means for transmitting the positioning assistance data per positioning method to the UE may be, e.g., the external interface 1010 and one or more processors 1002 with dedicated hardware or implementing executable code or software instructions in memory 1004 and/or medium 1020 such as the transmit AD module 1026. A means for receiving measurement information from the UE based on the PRS measurements wherein the position fix for the UE is determined by the location server may be, e.g., the external interface 1010 and one or more processors 1002 with dedicated hardware or implementing executable code or software instructions in memory 1004 and/or medium 1020 such as the location information receive module 1028 and position determination module 1030.

Reference throughout this specification to "one example", "an example", "certain examples", or "exemplary implementation" means that a particular feature, structure, or characteristic described in connection with the feature and/or example may be included in at least one feature and/or example of claimed subject matter. Thus, the appearances of the phrase "in one example", "an example", "in certain examples" or "in certain implementations" or other like phrases in various places throughout this specification are not necessarily all referring to the same feature, example, and/or limitation. Furthermore, the particular features, structures, or characteristics may be combined in one or more examples and/or features.

Some portions of the detailed description included herein are presented in terms of algorithms or symbolic representations of operations on binary digital signals stored within a memory of a specific apparatus or special purpose computing device or platform. In the context of this particular specification, the term specific apparatus or the like includes a general-purpose computer once it is programmed to perform particular operations pursuant to instructions from program software. Algorithmic descriptions or symbolic representations are examples of techniques used by those of ordinary skill in the signal processing or related arts to convey the substance of their work to others skilled in the art. An algorithm is here, and generally, is considered to be a self-consistent sequence of operations or similar signal processing leading to a desired result. In this context, operations or processing involve physical manipulation of physical quantities. Typically, although not necessarily, such quantities may take the form of electrical or magnetic signals capable of being stored, transferred, combined, compared, or otherwise manipulated. It has proven convenient at times, principally for reasons of common usage, to refer to such signals as bits, data, values, elements, symbols, characters, terms, numbers, numerals, or the like. It should be understood, however, that all of these or similar terms are to be associated with appropriate physical quantities and are merely convenient labels. Unless specifically stated otherwise, as apparent from the discussion herein, it is appreciated that throughout this specification discussions utilizing terms such as "processing," "computing," "calculating," "determining" or the like refer to actions or processes of a specific apparatus, such as a special purpose computer, special purpose computing apparatus or a similar special purpose electronic computing device. In the context of this specification, therefore, a special purpose computer or a similar special purpose electronic computing device is capable of manipulating or transforming signals, typically represented as physical electronic or magnetic quantities within memories, registers, or other information storage devices, transmission devices, or display devices of the special purpose computer or similar special purpose electronic computing device.

In the preceding detailed description, numerous specific details have been set forth to provide a thorough understanding of claimed subject matter. However, it will be understood by those skilled in the art that claimed subject matter may be practiced without these specific details. In other instances, methods and apparatuses that would be known by one of ordinary skill have not been described in detail so as not to obscure claimed subject matter.

The terms, "and", "or", and "and/or" as used herein may include a variety of meanings that also are expected to depend at least in part upon the context in which such terms are used. Typically, "or" if used to associate a list, such as A, B or C, is intended to mean A, B, and C, here used in the inclusive sense, as well as A, B or C, here used in the exclusive sense. In addition, the term "one or more" as used herein may be used to describe any feature, structure, or characteristic in the singular or may be used to describe a plurality or some other combination of features, structures, or characteristics. Though, it should be noted that this is merely an illustrative example and claimed subject matter is not limited to this example.

While there has been illustrated and described what are presently considered to be example features, it will be understood by those skilled in the art that various other modifications may be made, and equivalents may be substituted, without departing from claimed subject matter. It is understood, however, that the scope of protection sought is defined by the appending claims.

**Claims**

1.  A method (700) performed by a user equipment, UE, (104) in a wireless network for position determination of the UE (104), comprising:

    reporting one or more measurement capabilities per positioning method to an entity (602) in the wireless network;
    receiving (702) positioning assistance data per positioning method, the positioning assistance data comprising information for one or more Positioning Reference Signal, PRS, resource sets, one or more PRS resources, one or more frequency layers and one or more transmission points, TRPs (102);
    determining (704) prioritization for PRS signals to be measured based at least on one or more priority orderings of the information for the PRS resource sets, the PRS resources ,the one or more frequency layers, or the one or more TRPs (102) in the positioning assistance data, or a combination thereof or giving equal priority to one or more of the PRS resource sets or the PRS resources, or a combination thereof, wherein the information for the frequency layers, the TRPs (102), the PRS resource sets, and the PRS resources in the positioning assistance data is configured based on the reported one or more measurement capabilities per positioning method; and
    determining (706) PRS measurements of the PRS signals at least based on the prioritization for the PRS signals;
    wherein (708) a position fix for the UE (104) is determined based on the PRS measurements.

2.  The method (700) of claim 1, further comprising reporting measurement information based on the PRS measurements to an entity in the wireless network, wherein the position fix for the UE (104) is determined by the entity in the wireless network.

3.  The method (700) of claim 1, wherein the position fix for the UE (104) is determined by the UE (104).

4.  The method (700) of claim 1, wherein the positioning assistance data is per Radio Access Technology, RAT, dependent positioning method.

5.  The method (700) of claim 1, wherein the positioning assistance data per positioning method comprises separate positioning assistance data for Angle of Departure, AOD, Time Difference of Arrival, TDOA, and Multi Cell Round Trip Time, M-RTT.

6.  The method (700) of claim 1, wherein the positioning assistance data per positioning method comprises indices to a set of common PRS assistance data.

7.  The method (700) of claim 1, wherein for each positioning method, the information for the one or more PRS resource sets of a transmission point, TRP, in the positioning assistance data lists the PRS resource sets in a priority order of measurement to be performed by the UE (104), and optionally wherein the information further lists the frequency layers in a priority order of measurement to be performed by the UE (104), or lists the TRPs within each frequency layer in a priority order of measurement to be performed by the UE (104), or lists a combination thereof.

8.  The method (700) of claim 1, wherein for each positioning method, the information for the one or more PRS resources in the positioning assistance data lists the PRS resources in a priority order of measurement to be performed by the UE (104).

9.  The method (700) of claim 1, wherein the one or more measurement capabilities per positioning method indicates a maximum number of PRS resource sets per TRP (102) per frequency layer, and wherein determining the prioritization for the PRS measurements comprises prioritizing a first PRS resource set listed in the information for the PRS resource sets.

10. The method (700) of claim 1, wherein the one or more measurement capabilities per positioning method indicates a maximum number of PRS resources per PRS resource set, and wherein determining the prioritization for the PRS measurements comprises prioritizing a first PRS resource listed in the information for the PRS resources.

11. The method (700) of claim 1, wherein the one or more measurement capabilities per positioning method indicates a maximum number of PRS resources across all frequency layers, TRPs (102), and PRS resource sets, and wherein determining the prioritization for the PRS measurements comprises one of prioritizing based on frequency layers, then TRPs (102), then PRS resource sets, then PRS resources; or prioritizing a first PRS resource set from each TRP (102), then a second PRS resource set from each TRP (102).

12. The method (700) of claim 1, wherein the one or more measurement capabilities per positioning method indicates a maximum number of TRPs (102) across all frequency layers, and wherein determining the prioritization for the PRS measurements comprises prioritizing a first frequency layer and all TRPs (102) in the first frequency layer before a second frequency layer and all TRPs (102) in the second frequency layer; or prioritizing a first TRP (102) from each frequency layer, then a second TRP (102) from each frequency layer.

13. The method (700) of claim 1, wherein the one or more measurement capabilities per positioning method indicates a maximum number of PRS resources per frequency layer, and wherein determining the prioritization for the PRS measurements comprises one of prioritizing based on TRP (102), then PRS resource sets, then PRS resources; or prioritizing a first PRS resource set from each TRP (102), then a second PRS resource set from each TRP (102).

14. A user equipment, UE, (900, 104) in a wireless network configured to support position determination, comprising:

a wireless transceiver (910) configured to wirelessly communicate in the wireless network;
at least one memory (904);
at least one processor (902) coupled to the wireless transceiver (910) and the at least one memory (904), wherein the at least one processor (902) is configured to carry out the method (700) according to any of claims 1 to 13.

15. A non-transitory storage medium including program code stored thereon, the program code is operable to configure at least one processor in a user equipment, UE, (104) in a wireless network configured to support position determination of the UE (104), comprising:
Program code to carry out the method (700) according to any of claims 1 to 13.

**Patentansprüche**

1. Verfahren (700), durchgeführt von einem Benutzergerät (UE) (104) in einem drahtlosen Netzwerk zur Positionsbestimmung des UE (104), das Folgendes beinhaltet:

Melden einer oder mehrerer Messfähigkeiten nach Lokalisierungsverfahren an eine Entität (602) in dem drahtlosen Netzwerk;
Empfangen (702) von Lokalisierungshilfsdaten pro Lokalisierungsverfahren, wobei die Lokalisierungshilfsdaten Informationen für einen oder mehrere PRS-(Positioning Reference Signal)-Ressourcensätze, eine oder mehrere PRS-Ressourcen, eine oder mehrere Frequenzschichten und einen oder mehrere Übertragungspunkte, TRP, (102) umfassen;
Bestimmen (704) einer Priorisierung für zu messende PRS-Signale mindestens auf der Basis von einer oder mehreren Prioritätsreihenfolgen für die Informationen für die PRS-Ressourcensätze, die PRS-Ressourcen, die ein oder mehreren Frequenzschichten oder die ein oder mehreren TRPs (102) in den Lokalisierungshilfsdaten oder eine Kombination davon, oder Zuordnen der gleichen Priorität zu einem oder mehreren der PRS-Ressourcensätze oder der PRS-Ressourcen oder einer Kombination davon, wobei die Informationen für die Frequenzschichten, die TRPs (102), die PRS-Ressourcensätze und die PRS-Ressourcen in den Lokalisierungshilfsdaten auf der Basis der gemeldeten ein oder mehreren Messfähigkeiten pro Lokalisierungsverfahren konfiguriert werden; und
Bestimmen (706) von PRS-Messwerten der PRS-Signale zumindest auf der Basis der Priorisierung für die PRS-Signale;
wobei (708) ein Position Fix für das UE (104) auf der Basis der PRS-Messwerte bestimmt wird.

2. Verfahren (700) nach Anspruch 1, das ferner das Melden von Messinformationen auf der Basis der PRS-Messwerte an eine Entität in dem drahtlosen Netzwerk beinhaltet, wobei das Position Fix für das UE (104) durch die Entität in dem drahtlosen Netzwerk bestimmt wird.

3. Verfahren (700) nach Anspruch 1, wobei das Position Fix für das UE (104) durch das UE (104) bestimmt wird.

4. Verfahren (700) nach Anspruch 1, wobei die Lokalisierungshilfsdaten ein von der Funkzugangstechnik, RAT, abhängiges Lokalisierungsverfahren sind.

5. Verfahren (700) nach Anspruch 1, wobei die Lokalisierungshilfsdaten pro Lokalisierungsverfahren separate Lokalisierungshilfsdaten für AOD (Angle of Departure), TDOA (Time Difference of Arrival) und M-RTT (Multi Cell Round Trip Time) umfassen.

6. Verfahren (700) nach Anspruch 1, wobei die Lokalisierungshilfsdaten pro Lokalisierungsverfahren Indizes zu einem Satz gemeinsamer PRS-Hilfsdaten umfassen.

7. Verfahren (700) nach Anspruch 1, wobei für jedes Lokalisierungsverfahren die Informationen für die ein oder mehreren PRS-Ressourcensätze eines Übertragungspunkts, TRP, in den Lokalisierungshilfsdaten die PRS-Ressourcensätze in einer Prioritätsreihenfolge von vom UE (104) durchzuführenden Messungen auflistet, und wobei die Informationen optional ferner die Frequenzschichten in einer Prioritätsreihenfolge von vom UE (104) durchzuführenden Messungen auflistet oder die TRPs innerhalb jeder Frequenzschicht in einer Prioritätsreihenfolge von vom UE (104) durchzuführenden Messungen auflistet oder eine Kombination davon auflistet.

8. Verfahren (700) nach Anspruch 1, wobei für jedes Lokalisierungsverfahren die Informationen für die ein oder mehreren PRS-Ressourcen in den Lokalisierungshilfsdaten die PRS-Ressourcen in einer Prioritätsreihenfolge von vom UE (104) durchzuführenden Messungen auflisten.

9. Verfahren (700) nach Anspruch 1, wobei die ein oder mehreren Messfähigkeiten pro Lokalisierungsverfahren eine maximale Anzahl von PRS-Ressourcensätzen pro TRP (102) pro Frequenzschicht angeben, und wobei das Bestimmen der Priorisierung für die PRS-Messwerte das Priorisieren eines in den Informationen für die PRS-Ressourcensätze aufgeführten ersten PRS-Ressourcensatzes umfasst.

10. Verfahren (700) nach Anspruch 1, wobei die ein oder mehreren Messfähigkeiten pro Lokalisierungsverfahren eine maximale Anzahl von PRS-Ressourcen pro PRS-Ressourcensatz angeben, und wobei das Bestimmen der Priorisierung für die PRS-Messwerte das Priorisieren einer in den Informationen für die PRS-Ressourcen aufgeführten ersten PRS-Ressource beinhaltet.

11. Verfahren (700) nach Anspruch 1, wobei die ein oder mehreren Messfähigkeiten pro Lokalisierungsverfahren eine maximale Anzahl von PRS-Ressourcen über alle Frequenzschichten, TRPs (102) und PRS-Ressourcensätze hinweg angeben, und wobei das Bestimmen der Priorisierung für die PRS-Messungen entweder Priorisieren auf der Basis von Frequenzschichten, dann TRPs (102), dann PRS-Ressourcensätzen, dann PRS-Ressourcen; oder Priorisieren eines ersten PRS-Ressourcensatzes von jedem TRP (102), dann eines zweiten PRS-Ressourcen-Satzes von jedem TRP (102) beinhaltet.

12. Verfahren (700) nach Anspruch 1, wobei die ein oder mehreren Messfähigkeiten pro Lokalisierungsverfahren eine maximale Anzahl von TRPs (102) über alle Frequenzschichten hinweg angeben, und wobei das Bestimmen der Priorisierung für die PRS-Messungen das Priorisieren einer ersten Frequenzschicht und aller TRPs (102) in der ersten Frequenzschicht vor einer zweiten Frequenzschicht und aller TRPs (102) in der zweiten Frequenzschicht oder das Priorisieren eines ersten TRP (102) von jeder Frequenzschicht, dann eines zweiten TRP (102) von jeder Frequenzschicht beinhaltet.

13. Verfahren (700) nach Anspruch 1, wobei die ein oder mehreren Messfähigkeiten pro Lokalisierungsverfahren eine maximale Anzahl von PRS-Ressourcen pro Frequenzschicht angeben, und wobei das Bestimmen der Priorisierung für die PRS-Messungen entweder eine Priorisierung auf der Basis von TRP (102), dann PRS-Ressourcensätzen, dann PRS-Ressourcen; oder eine Priorisierung eines ersten PRS-Ressourcensatzes von jedem TRP (102), dann eines zweiten PRS-Ressourcensatzes von jedem TRP (102) beinhaltet.

14. Benutzergerät, UE, (900, 104) in einem drahtlosen Netzwerk, konfiguriert zur Unterstützung von Positionsbestimmung, das Folgendes umfasst:

einen drahtlosen Transceiver (910), der für drahtlose Kommunikation in dem drahtlosen Netzwerk konfiguriert ist;
mindestens einen Speicher (904);
mindestens einen Prozessor (902), der mit dem drahtlosen Transceiver (910) und dem mindestens einen Speicher (904) gekoppelt ist, wobei der mindestens eine Prozessor (902) zum Durchführen des Verfahrens (700) nach einem der Ansprüche 1 bis 13 konfiguriert ist.

15. Nichtflüchtiges Speichermedium mit darauf gespeichertem Programmcode, wobei der Programmcode die Aufgabe hat, mindestens einen Prozessor in einem Benutzergerät, UE, (104) in einem drahtlosen Netzwerk zu konfigurieren, das zum Unterstützen von Positionsbestimmung des UE (104) konfiguriert ist, das Folgendes umfasst: Programmcode zum Durchführen des Verfahrens (700) nach einem der Ansprüche 1 bis 13.

**Revendications**

1. Procédé (700) réalisé par un équipement utilisateur, UE, (104) dans un réseau sans fil pour une détermination de position de l'UE (104), comprenant :

   la déclaration d'une ou plusieurs capacités de mesure par procédé de positionnement à une entité (602) dans le réseau sans fil ;
   la réception (702) de données d'aide au positionnement par procédé de positionnement, les données d'aide au positionnement comprenant des informations pour un ou plusieurs ensembles de ressources de signaux de référence de positionnement, PRS, une ou plusieurs ressources de PRS, une ou plusieurs couches de fréquences et un ou plusieurs points de transmission, TRP (102) ;
   la détermination (704) d'une priorisation pour des signaux PRS à mesurer en fonction au moins d'un ou plusieurs ordres de priorité des informations pour les ensembles de ressources PRS, les ressources PRS, les une ou plusieurs couches de fréquences ou les un ou plusieurs TRP (102) dans les données d'aide au positionnement, ou une combinaison de ceux-ci, ou l'accord d'une priorité égale à un ou plusieurs des ensembles de ressources PRS ou des ressources PRS, ou une combinaison de ceux-ci, dans lequel les informations relatives aux couches de fréquences, aux TRP (102), aux ensembles de ressources PRS et aux ressources PRS dans les données d'aide au positionnement sont configurées en fonction des une ou plusieurs capacités de mesure déclarées par procédé de positionnement ; et
   la détermination (706) de mesures PRS des signaux PRS en fonction au moins de la priorisation des signaux PRS ;
   dans lequel (708) un repère de position pour l'UE (104) est déterminé en fonction des mesures PRS.

2. Procédé (700) selon la revendication 1, comprenant en outre la transmission d'informations de mesure basées sur les mesures PRS à une entité du réseau sans fil, dans lequel le repère de position de l'UE (104) est déterminé par l'entité dans le réseau sans fil.

3. Procédé (700) selon la revendication 1, dans lequel le repère de position pour l'UE (104) est déterminé par l'UE (104).

4. Procédé (700) selon la revendication 1, dans lequel les données d'aide au positionnement sont par procédé de positionnement selon la technologie d'accès radio, RAT.

5. Procédé (700) selon la revendication 1, dans lequel les données d'aide au positionnement par procédé de positionnement comprennent des données d'aide au positionnement distinctes pour un angle de départ, AOD, une différence de temps d'arrivée, TDOA, et un temps d'aller-retour multicellulaire, M-RTT.

6. Procédé (700) selon la revendication 1, dans lequel les données d'aide au positionnement par procédé de positionnement comprennent des indices relatifs à un ensemble de données d'aide PRS communes.

7. Procédé (700) selon la revendication 1, dans lequel, pour chaque procédé de positionnement, les informations relatives aux un ou plusieurs ensembles de ressources PRS d'un point de transmission, TRP, dans les données d'aide au positionnement répertorie les ensembles de ressources PRS dans un ordre de priorité de mesures devant être réalisées par l'UE (104), et éventuellement dans lequel les informations répertorient en outre les couches de fréquence dans un ordre de priorité de mesures devant être réalisées par l'UE (104), ou répertorie les TRP à l'intérieur de chaque couche de fréquence dans un ordre de priorité de mesures devant être réalisées par l'UE (104), ou répertorie une combinaison de ceux-ci.

8. Procédé (700) selon la revendication 1, dans lequel, pour chaque procédé de positionnement, les informations relatives aux une ou plusieurs ressources PRS dans les données d'aide au positionnement répertorient les ressources PRS dans un ordre de priorité de mesures devant être réalisées par l'UE (104).

9. Procédé (700) selon la revendication 1, dans lequel les une ou plusieurs capabilités de mesure par procédé de positionnement indiquent un nombre maximal d'ensembles de ressources PRS par TRP (102) par couche de fréquence, et dans lequel la détermination de la priorisation des mesures PRS comprend la priorisation d'un premier ensemble de ressources PRS répertorié dans les informations relatives aux ensembles de ressources PRS.

10. Procédé (700) selon la revendication 1, dans lequel les une ou plusieurs capabilités de mesure par procédé de positionnement indiquent un nombre maximal de ressources PRS par ensemble de ressources PRS, et dans lequel la détermination de la priorisation des mesures PRS comprend la priorisation d'une première ressource PRS répertoriée dans les informations relatives aux ressources PRS.

11. Procédé (700) selon la revendication 1, dans lequel les une ou plusieurs capabilités de mesure par procédé de positionnement indiquent un nombre maximal de ressources PRS pour tous les couches de fréquences, TRP (102) et ensembles de ressources PRS, et dans lequel la détermination de la priorisation des mesures PRS comprend l'une d'une priorisation en fonction des couches de fréquence, puis des TRP (102), puis des ensembles de ressources PRS, puis des ressources du SRP ; ou d'une priorisation d'un premier ensemble de ressources PRS provenant de chaque TRP (102), puis d'un deuxième ensemble de ressources PRS provenant de chaque TRP (102).

12. Procédé (700) selon la revendication 1, dans lequel les une ou plusieurs capabilités de mesure par procédé de positionnement indiquent un nombre maximal de TRP (102) sur toutes les couches de fréquence, et dans lequel la détermination de la priorisation des mesures PRS comprend la priorisation d'une première couche de fréquence et de tous les TRP (102) dans la première couche de fréquence avant une deuxième couche de fréquence et de tous les TRP (102) dans la deuxième couche de fréquence ; ou la priorisation d'un premier TRP (102) de chaque couche de fréquence, puis d'un deuxième TRP (102) de chaque couche de fréquence.

13. Procédé (700) selon la revendication 1, dans lequel les une ou plusieurs capabilités de mesure par procédé de positionnement indiquent un nombre maximal de ressources PRS par couche de fréquence, et dans lequel la détermination de la priorisation des mesures PRS comprend l'une d'une priorisation basée sur TRP (102), puis sur les ensembles de ressources PRS, puis sur les ressources PRS ; ou d'une priorisation d'un premier ensemble de ressources PRS de chaque TRP (102), puis d'un deuxième ensemble de ressources PRS de chaque TRP (102).

14. Equipement utilisateur, UE, (900, 104) dans un réseau sans fil configuré pour prendre en charge la détermination de position, comprenant :

   un émetteur-récepteur sans fil (910) configuré pour communiquer sans fil dans le réseau sans fil ;
   au moins une mémoire (904) ;
   au moins un processeur (902) couplé à l'émetteur-récepteur sans fil (910) et à la mémoire (904), dans lequel l'au moins un processeur (902) est configuré pour mettre en œuvre le procédé (700) selon l'une quelconque des revendications 1 à 13.

15. Support de stockage non transitoire sur lequel est stocké un code de programme, le code de programme est exploitable pour configurer au moins un processeur dans un équipement utilisateur, UE, (104) dans un réseau sans fil configuré pour prendre en charge la détermination de position de l'UE (104), comprenant :
   un code de programme pour mettre en œuvre le procédé (700) selon l'une quelconque des revendications 1 à 13.

**FIG. 1**

*FIG. 2A*

**FIG. 2B**

*FIG. 3*

*FIG. 4*

500 ⌐

```
                    ┌─────────┐
                    │ Layer 1 │
                    └────┬────┘
           ┌─────────────┴─────────────┐
      ┌────┴────┐                 ┌────┴────┐
      │  TRP 1  │                 │  TRP 2  │
      └────┬────┘                 └────┬────┘
      ┌────┴────┐               ┌──────┴──────┐
  ┌───┴───┐ ┌───┴───┐       ┌───┴───┐     ┌───┴───┐
  │ Set 1 │ │ Set 2 │       │ Set 3 │     │ Set 4 │
  └───┬───┘ └───┬───┘       └───┬───┘     └───┬───┘
   ┌──┴──┐   ┌──┴──┐         ┌──┴──┐       ┌──┴──┐
┌──┴┐ ┌─┴─┐┌─┴─┐ ┌┴──┐    ┌──┴┐ ┌─┴─┐   ┌─┴─┐ ┌─┴──┐
│RES│ │RES││RES│ │RES│    │RES│ │RES│   │RES│ │RES │
│ 1 │ │ 2 ││ 3 │ │ 4 │    │ 5 │ │ 6 │   │ 7 │ │ 8  │
└─┬─┘ └─┬─┘└─┬─┘ └─┬─┘    └───┘ └───┘   └───┘ └────┘
 (3)   (4)  (1)   (2)
```

**FIG. 5A**

520 ⌐

```
                    ┌─────────┐
                    │ Layer 1 │
                    └────┬────┘
           ┌─────────────┴─────────────┐
      ┌────┴────┐                 ┌────┴────┐
      │  TRP 1  │                 │  TRP 2  │
      └────┬────┘                 └────┬────┘
      ┌────┴────┐               ┌──────┴──────┐
  ┌───┴───┐ ┌───┴───┐       ┌───┴───┐     ┌───┴───┐
  │ Set 1 │ │ Set 2 │       │ Set 3 │     │ Set 4 │
  └───┬───┘ └───┬───┘       └───┬───┘     └───┬───┘
   ┌──┴──┐   ┌──┴──┐         ┌──┴──┐       ┌──┴──┐
┌──┴┐ ┌─┴─┐┌─┴─┐ ┌┴──┐    ┌──┴┐ ┌─┴─┐   ┌─┴─┐ ┌─┴──┐
│RES│ │RES││RES│ │RES│    │RES│ │RES│   │RES│ │RES │
│ 1 │ │ 2 ││ 3 │ │ 4 │    │ 5 │ │ 6 │   │ 7 │ │ 8  │
└─┬─┘ └─┬─┘└─┬─┘ └─┬─┘    └───┘ └───┘   └───┘ └────┘
 (1)   (3)  (2)   (4)
```

**FIG. 5B**

550

```
                          Layer 1

          TRP 1                              TRP 2

     Set 1        Set 2              Set 3          Set 4

  RES 1  RES 2  RES 3  RES 4    RES 5  RES 6    RES 7  RES 8
   (1)    (3)    (5)    (7)      (2)    (4)      (6)    (8)
```

**FIG. 5C**

570

```
                          Layer 1

          TRP 1                              TRP 2

     Set 1        Set 2              Set 3          Set 4

  RES 1  RES 2  RES 3  RES 4    RES 5  RES 6    RES 7  RES 8
   (1)    (5)    (3)    (7)      (2)    (6)      (4)    (8)
```

**FIG. 5D**

600

104 — UE

102-1 — 102-2 — TRP

602 — Location Server

1. Request Positioning Capability

2. Provide Positioning Capability

3. Generate AD with prioritization per postioning method

4. Provide Assistance Data

5. Request Location Information

6. Determine Prioritization for PRS measurements per positioning method

7. DL PRS Transmission

8. PRS Measurements Based on Prioritization

9. UL PRS Transmission

10. Position Measurement

11. Provide Location Information

12. Determine UE Location

13. Provide Location Information

14. Determine UE Location

**FIG. 6**

**700**

**702**

Receive positioning assistance data per positioning method, the positioning assistance data comprising information for one or more Positioning Reference Signal (PRS) resource sets, and one or more PRS resources

**704**

Determine prioritization for PRS signals to be measured based at least on one or more priority orderings of the information for the PRS resource sets, or the PRS resources in the positioning assistance data, or a combination thereof or giving equal priority to one or more of the PRS resource sets or the PRS resources, or a combination thereof

**706**

Determine PRS measurements of the PRS signals at least based on the prioritization for the PRS signals

**708**

Wherein a position fix for the UE is determined based on the PRS measurements

*FIG. 7*

**800**

**802**

Receive a measurement capability per positioning method from the UE

**804**

Generate positioning assistance data per positioning method, the positioning assistance data comprising information for Positioning Reference Signal (PRS) resource sets, and PRS resources that is configured based on the measurement capability per positioning method to provide an order of priority of the PRS resource sets or the PRS resources to be measured by the UE or a combination thereof or to indicate equal priority of the PRS resource sets or the PRS resources to be measured by the UE or a combination thereof

**806**

Transmit the positioning assistance data per positioning method to the UE

**808**

Wherein a position fix for the UE is determined based on PRS measurements performed by the UE using the order of priority

*FIG. 8*

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017280280 A
- US 2017102447 A
- US 2020021946 A
- US 2017201960 A